Europäisches Patentamt

European Patent Office

Office européen des brevets

(19)

(11) EP 0 792 059 A1

(12) EUROPÄISCHE PATENTANMELDUNG

(43) Veröffentlichungstag:
27.08.1997 Patentblatt 1997/35

(51) Int. Cl.⁶: $H04N\ 1/053$, $B41C\ 1/14$, $G01B\ 11/24$

(21) Anmeldenummer: 96102598.8

(22) Anmeldetag: 21.02.1996

(84) Benannte Vertragsstaaten:
AT BE CH DE DK ES FR GB GR IE IT LI LU MC NL PT SE

(71) Anmelder:
Schablonentechnik Kufstein Aktiengesellschaft
6330 Kufstein (AT)

(72) Erfinder: Fischer, Hannes
6300 Wörgl (AT)

(74) Vertreter:
TER MEER STEINMEISTER & PARTNER GbR
Mauerkircherstrasse 45
81679 München (DE)

(54) **Verfahren und Vorrichtung zur Herstellung einer Druckschablone**

(57)     Bei der Herstellung einer Druckschablone, z. B. einer Rotationsdruckschablone für den Textildruck, wird zur Übertragung eines in einem elektronischen Speicher (32) gespeicherten Musters auf einen Schablonenzylinder (1) aus einer Düse (2) ausgespritzte Flüssigkeit (24) bei sich drehendem Schablonenzylinder (1) auf dessen Mantelfläche aufgetragen, wobei die Düse (2) durch zum Muster gehörende Musterdaten angesteuert wird. In Abhängigkeit wenigstens einer Abweichung zwischen Ist- und Sollage der Mantelfläche werden gegenüber den zur Sollage gehörenden Musterdaten in Umfangsrichtung des Schablonenzylinders (1) früher oder später liegende Musterdaten ausgelesen, um eine Musterverzerrung infolge der Abweichung zu vermeiden.

Fig. 9

EP 0 792 059 A1

**Beschreibung**

Die Erfindung bezieht sich auf ein Verfahren sowie auf eine Vorrichtung zur Herstellung einer Druckschablone gemäß den Oberbegriffen der Patentansprüche 1 und 10.

Es ist bereits ein Verfahren zur Herstellung einer Rotationsdruckschablone bekannt, bei dem zur Übertragung eines in einem elektronischen Speicher gespeicherten Musters auf einen Schablonenzylinder aus einer Düse ausgespritzte Flüssigkeit bei sich drehendem Schablonenzylinder auf dessen Mantelfläche aufgetragen und die Düse durch zum Muster gehörende Musterdaten angesteuert wird.

Die hierzu verwendete Vorrichtung enthält eine Lagereinrichtung zur drehbaren Lagerung des Schablonenzylinders, einen elektronischen Speicher zur Speicherung des Musters, wenigstens eine Düse zum Ausspritzen von Flüssigkeit, um das Muster auf die Mantelfläche des Schablonenzylinders zu übertragen, und eine Steuereinrichtung, die das Muster bei sich drehendem Schablonenzylinder ausliest und entsprechend den ausgelesenen Musterdaten die Düse ansteuert.

Es hat sich gezeigt, daß schon kleinere und insbesondere stärkere Abweichungen der Mantelfläche des Schablonenzylinders von der idealen Kreiszylinderform zu starken Verlagerungen des Musterbilds in Umfangsrichtung des Schablonenzylinders führen. Aufgrund der radialen Rundlaufabweichung der Mantelfläche des Schablonenzylinders treten Bemusterungsfehler in Tangentialrichtung auf, weil die Zeit zwischen Ausspritzen eines Flüssigkeitstropfens aus der Düse und Erreichen der Flüssigkeit auf der Mantelfläche größer wird, wenn sich die Mantelfläche von der Düse entfernt und das Musterbild dadurch auf dem Schablonenzylinderverspätet erzeugt wird. Eine entsprechende Verschiebung des Musterbilds in Umfangsrichtung tritt auch auf, wenn sich die Mantelfläche des Schablonenzylinders der Düse nähert und dadurch eine zu frühe Erzeugung des Musterbilds erfolgt.

Der Erfindung liegt die Aufgabe zugrunde, ein Verfahren und eine Vorrichtung der eingangs genannten Art so weiterzubilden, daß durch Flüssigkeitsauftrag zu erzeugende Musterbilder auch bei stärkeren Rundlaufabweichungen des Schablonenzylinders verzerrungsfrei hergestellt werden können.

Die verfahrensseitige Lösung der gestellten Aufgabe ist im kennzeichnenden Teil des Patentanspruchs 1 angegeben. Dagegen findet sich die vorrichtungsseitige Lösung der gestellten Aufgabe im kennzeichnenden Teil des Patentanspruchs 10. Vorteilhafte Weiterbildungen der Erfindung sind den jeweils nachgeordneten Unteransprüchen zu entnehmen.

Ein Verfahren zur Herstellung einer Druckschablone nach der Erfindung zeichnet sich dadurch aus, daß in Abhängigkeit wenigstens einer Abweichung zwischen Ist- und Sollage der Mantelfläche gegenüber den zur Sollage gehörenden Musterdaten in Umfangsrichtung des Schablonenzylinders früher oder später liegende Musterdaten ausgelesen werden, um eine Musterverlagerung bzw. Musterverzerrung infolge der Abweichung zu vermeiden.

Mit anderen Worten wird erfindungsgemäß vorgeschlagen, den Fehler, der durch die Verlängerung oder Verkürzung derjenigen Zeit, die die Flüssigkeit vom Ausspritzen aus der Düse bis zum Auftreffen auf die Mantelfläche des Schablonenzylinders benötigt, dadurch auszugleichen, daß man die Musterdaten in Abhängigkeit der genannten radialen Abweichung früher oder später der Düse zuleitet.

Die Abweichung zwischen Ist- und Sollage der Mantelfläche im Bereich des Flüssigkeitsauftrags kann u. U. bekannt oder vorgegeben sein, so daß sich dann in Abhängigkeit hiervon die früher oder später aufzurufenden Musterdaten, jeweils bezogen auf die zur Sollage gehörenden Musterdaten, entsprechend adressieren lassen. Andererseits kann die Abweichung zwischen Ist- und Sollage der Mantelfläche im Bereich des Flüssigkeitsauftrags aber auch ermittelt werden, und zwar dadurch, daß eine radiale Istlage der Mantelfläche an wenigstens einem Meßpunkt außerhalb des Bereichs, in welchem ein Flüssigkeitsauftrag erfolgt, gemessen wird, oder aber auch am Ort des Flüssigkeitsauftrags, wenn z. B. die Düse selbst als Abstandssensor ausgebildet ist oder einen solchen an ihrem Ausgang trägt. Eine Messung des radialen Abstands ist auch in einer Zylinder-Umfangsebene möglich, die außerhalb derjenigen liegt, in der gerade ein Flüssigkeitsauftrag erfolgt. Aus dieser Messung läßt sich dann die Abweichung zwischen Ist- und Sollage der Mantelfläche bzw. die Musterverlagerung im Bereich des Flüssigkeitsauftrags ermitteln, und zwar in Abhängigkeit entweder nur der Radialabweichung, in Abhängigkeit von Radial- und Tangentialabweichung oder in Abhängigkeit nur der Tangentialabweichung der Mantelfläche gegenüber ihrer jeweiligen Tangential-Sollage bzw. Radial-Sollage.

Die Messung der radialen Istlage der Mantelfläche an wenigstens einem Meßpunkt, z. B. außerhalb des Bereichs, in welchem ein Flüssigkeitsauftrag erfolgt oder innerhalb dieses Bereichs, ist im allgemeinen dann hinreichend für die Bestimmung von Radialabweichung und Tangentialabweichung im Bereich des Flüssigkeitsauftrags, wenn es sich um einen mehr oder weniger stark ausgerundeten Schablonenzylinder handelt, dessen Wand während des Flüssigkeitsauftrags bzw. während der Gravurarbeit nicht schwingt.

Handelt es sich dagegen bei dem Schablonenzylinder um einen dünnwandigen Hohlzylinder, dessen dünner Hohlzylindermantel durch Störungen zu Schwingungen angeregt wird, so muß nach einer Weiterbildung der Erfindung die radiale Istlage der Mantelfläche des Hohlzylinders an drei in derselben Umfangsebene voneinander beabstandeten Meßpunkten gemessen werden, um hieraus die Abweichung zwischen Ist- und Sollage der Mantelfläche im Bereich des Flüssigkeitsauftrags bzw. die Musterverlagerung zu ermitteln, also die Radial- und Tangentialabweichung. In diesem Fall läßt sich auch bei schwingendem Hohlzylindermantel ein unverzerrtes Schablonenmuster auf die Mantelfläche auftragen.

Natürlich könnten auch ein oder mehrere Abstandssensoren relativ zum Schablonenzylinder in seiner Längsrichtung im Abstand zueinander fest angeordnet sein, um radiale Istlagen der Zylinderwand an einer Vielzahl von Längspositionen gleichzeitig zu messen. Aus denjeweiligen Meßergebnissen ließe sich ebenfalls die Musterverlagerung im Bereich des Flüssigkeitsauftrags errechnen.

Um insbesondere bei dünnwandigen Hohlzylindern zu noch besseren Gravurergebnissen zu kommen, können diese im Innern mit einem Überdruck versehen werden, um auf diese Weise Abweichungen von der Kreiszylinderform zu vermeiden und Zylinderwandschwingungen zu unterdrücken.

Nach einer weiteren Ausgestaltung der Erfindung erfolgt das Auslesen der früher oder später liegenden Musterdaten (jeweils in Umfangsrichtung des Schablonenzylinders gesehen) dadurch, daß in Abhängigkeit der ermittelten Musterverlagerung ein den elektronischen Speicher adressierender Adressenzähler angesteuert wird. Je nach Größe und Vorzeichen der Abweichung wird somit der Adressenzähler vor- oder zurückgesetzt, um auf diese Weise auf die relevanten Musterdaten zugreifen zu können. Durch die Abweichung wird somit die Größe eines Offsets für den Adressenzähler ermittelt.

Eine Vorrichtung nach der Erfindung zeichnet sich aus durch eine Adressen-Umschalteinrichtung zur Umschaltung eines Zählwerts eines Adressenzählers für den elektronischen Speicher in Abhängigkeit wenigstens einer Abweichung zwischen Ist- und Sollage der Mantelfläche im Bereich des Flüssigkeitsauftrags. Dabei kann wenigstens ein Abstandssensor zur Messung der radialen Istlage der Mantelfläche des Schablonenzylinders vorhanden sein, welcher innerhalb oder außerhalb des Bereichs des Flüssigkeitsauftrags liegen kann, wobei die Adressen-Umschalteinrichtung in Abhängigkeit des Ausgangssignals des Abstandssensors ein Adressenumschaltsignal zur Ansteuerung des Adressenzählers generiert. Das Adressenumschaltsignal kann auch als Offset-Signal bezeichnet werden.

Das erfindungsgemäße Verfahren eignet sich in erster Linie zur Herstellung von Rotationsdruckschablonen, ist aber auch geeignet für die Herstellung von Flachdruckschablonen. Im zuletzt genannten Fall kann z. B. eine flache Schablone auf die Mantelfläche eines Zylinders aufgespannt und durch Flüssigkeitsauftrag bemustert werden, um anschließend und ggf. nach weiteren Bearbeitungsschritten wieder vom Zylinder abgenommen und als Flachdruckschablone verwendet zu werden.

Darüber hinaus ist es beim erfindungsgemäßen Verfahren möglich, die Flüssigkeit aus der Düse direkt auf die Mantelfläche des Schablonenzylinders aufzuspritzen oder die Flüssigkeit nach Ausspritzen aus der Düse über ein Druckwerkzeug auf die Mantelfläche des Schablonenzylinders zu übertragen.

Der Schablonenzylinder selbst kann in unterschiedlichen Ausführungsformen vorliegen. Zum einen kann es sich bei ihm um einen Siebzylinder handeln, also um einen dünnwandigen und gleichmäßig perforierten Hohlzlyinder, auf den z. B. Abdeckflüssigkeit mittels der Düse aufgespritzt wird, um Sieböffnungen musterbedingt zu verschließen. Es kann sich aber auch um einen elastischen Vollzylinder handeln, dessen Oberfläche elektrisch leitend ist und durch aufgebrachte Flüssigkeit mit einem Muster versehen wird, um anschließend aufder Oberfläche zum Beispiel durch einen Aufnickelungsvorgang einen Siebzylinder herzustellen. Der Schablonezylinder kann aber auch ein solcher sein, der sich zur Herstellung von Flexo-Druckformen oder von Tief- bzw. Hochdruckformen eignet.

Ebenfalls kann das Aufbringen von Mustern auf der Oberfläche des jeweiligen Schablonenzylinders in unterschiedlicher Weise erfolgen, wenn nur dafür gesorgt wird, daß der gesamte Bemusterungsprozeß einen Schritt enthält, mit dem aus einer Düse ausgespritzte Flüssigkeit musterbdingt auf die Oberfläche des Schablonenzylinders gelangt. Oben wurde bereits erwähnt, daß die Flüssigkeit direkt Sieböffnungen verschließen kann, beispielsweise im Falle eines hohlzylindrischen Siebs. Letzteres kann aber auch auf seiner äußeren Oberfläche eine durchgehende Lackschicht tragen, die zunächst sämtliche Sieböffnungen verschließt, Durch Aufbringen der Flüssigkeit zur Erzeugung des Musters auf der Umfangsfläche der Lackschicht läßt sich diese bereichsweise abdecken, wenn als Flüssigkeit eine lichtundurchlässige Substanz verwendet wird, so daß anschließend durch Belichten und Entwickeln der Lackschicht wieder musterbedingte Siebbereiche freigelegt werden können. In ähnlicher Weise können Lackschichten, die lichtempfindlich sind, auch auf anderen Schablonenzylindern vorhanden sein und durch aufgebrachte Flüssigkeit musterbedingt abgedeckt werden, um andere der genannten Schablonen erzeugen zu können.

Die Druck- bzw. Rotationsdruckschablonen nach der Erfindung kommen vorzugsweise im Bereich des Textildrucks zum Einsatz, können aber auch zum Bedrucken anderer Materialien, zum Beispiel von Papier, verwendet werden.

Die Erfindung wird nachfolgend unter Bezugnahme auf die Zeichnung im einzelnen beschrieben.
Es zeigen:

**Figur 1** die Verhältnisse bei einem dünnwandigen Hohlzylinder, dessen Zylinderwand schwingt;

**Figur 2** die Verhältnisse bei einem dünnwandigen Hohlzylinder, der kreisrund ausgerundet, jedoch exzentrisch gelagert ist:

**Figur 3** eine Darstellung zur Erläuterung der Relativbewegung zwischen aufgespritztem Flüssigkeitstropfen und Schablonenzylinderumfang;

**Figur 4** eine weitere Skizze zur Berechnung der Korrektur von Rundlauffehlern;

**Figur 5** eine Skizze zur Erläuterung der Lage von Schwingungsknoten und Schwingungsbäuchen bei einem dünnwandigen Hohlzylinder;

**Figur 6** eine Skizze zur Erläuterung von statischen und dynamischen Fehleranteilen:

**Figur 7** einen schematischen Gesamtaufbau der erfindungsgemäßen Vorrichtung;

**Figur 8** einen Schnitt durch die Vorrichtung nach Figur 7 im Bereich des Schablonenzylinders senkrecht zur Zylinderachse; und

**Figur 9** ein Blockschaltbild der erfindungsgemäßen Vorrichtung nach Figur 7.

Bei der Gravur von z. B. kreiszylinderförmigen Siebdruckschablonen auf einer dafür bestimmten Maschine (= Gravursmaschine) ist ein genauer Rundlauf für das fehlerfreie Zusammenpassen der verschiedenen Farben, die mit einem Satz solcher Schablonen gedruckt werden, sehr wichtig. Abweichungen der Querschnitte der Schablone von der Kreisform und exzentrische Lagen des Mittelpunkts eines Querschnittkreises gegenüber der Drehachse der Gravurmaschine verursachen ungenau gravierte und in Umfangsrichtung verschobene Musterbilder auf dem Siebzylinder. Betrachtet man eine reale Rundschablone, das ist z. B. ein dünnwandiger, kreisförmiger und ggf. perforierter Hohlzylinder, der üblicherweise einen Durchmesser von 200 bis 300 mm, eine Länge von 1000 bis 3000 mm und eine Wandstärke von 0,1 mm aufweist, so kann man feststellen, daß dieser gegenüber der angestrebten kreiszylindrischen Gestalt Formabweichungen aufweist, die bis zu einigen Zehntel Millimeter betragen können. Natürlich kommt es bei der Ermittlung dieser Formabweichungen darauf an, wie der Hohlzylinder während der Messung eingespannt wird. Stellt man z. B. die Rundschablone mit einem ihrer Endquerschnitte auf den Boden, so können die Formabweichungen der realen Rundschablone gegenüber einem gleichgroßen idealen Kreiszylinder sogar bis zu einigen Millimetern anwachsen. Bei der obigen Angabe über die Formabweichungen wurde vorausgesetzt, daß die beiden Stirnseiten der Schablone von genau rundlaufenden Spannvorrichtungen festgehalten werden, z. B. aufgenau rundlaufenden Innenspannzangen festgeklemmt werden, oder daß rundlauffehlerfreie konische Endstücke nach Art der Körnerspitzen einer Drehbank in die offenen Stirnseiten der Schablone eingreifen. Bei entsprechend genauer Ausführung dieser Spanneinrichtungen wird die dünne Rundschablone an ihren Enden einen ausreichend geringen Schlag aufweisen, jedoch gegen ihre Mitte zu aufgrund von inneren Spannungen immer stärkere Abweichungen von der Rundheit zeigen. Mißt man diese Abweichungen mittels eines berührungslosen Meßverfahrens z. B. induktiv oder optisch, so stellt man gegen die Mitte der Schablone die schon oben erwähnten Rundheitsabweichungen von einigen Zehntel Millimetern fest. Die Messung der Rundheitsabweichungen soll letztlich einen Ausgleich dieser Fehler durch geeignete technische Maßnahmen ermöglichen, so daß Gravurfehler vermieden werden. Die Meßeinrichtung wird hier als Sensorbezeichnet und soll mittels eines optischen oder induktiven, auf jeden Fall aber berührungslosen Verfahrens den senkrechten Abstand zwischen einem fest mit ihr verbundenen Bezugspunkt und der vorbeibewegten Schablonenwand feststellen.

Physikalische Größen des Umfelds der Schablone beeinflussen die Rundheitsabweichungen, wodurch diese Abweichungen entweder verstärkt oder vermindert werden. So wirkt z. B. ein wie auch immer auf die Innenseite der Schablone aufgebrachter Druck auf diese ausrundend, d. h. die Schablone wird durch die sich ausbildenden Membranspannungen besser der Form eines Kreiszylinders angenähert.

Zeitlich veränderliche, auf die Schablone einwirkende Kräfte regen diese zu Schwingungen an und können die Abweichungen verstärken. Solche Kräfte werden beispielsweise durch schlechte Drehantriebe freigesetzt. Diese den statischen Formfehlern überlagerten dynamischen Abweichungen der Hohlzylinderwand von der Rundheit können, wie Versuche gezeigt haben, ebenfalls durch einen auf die Innenseite der Schablone wirkenden Druck vermindert werden. Der Druck dämpft offensichtlich die Schwingungen der Schablone; hierauf wird später nochmals eingegangen. Allerdings ist er nicht zwingend erforderlich.

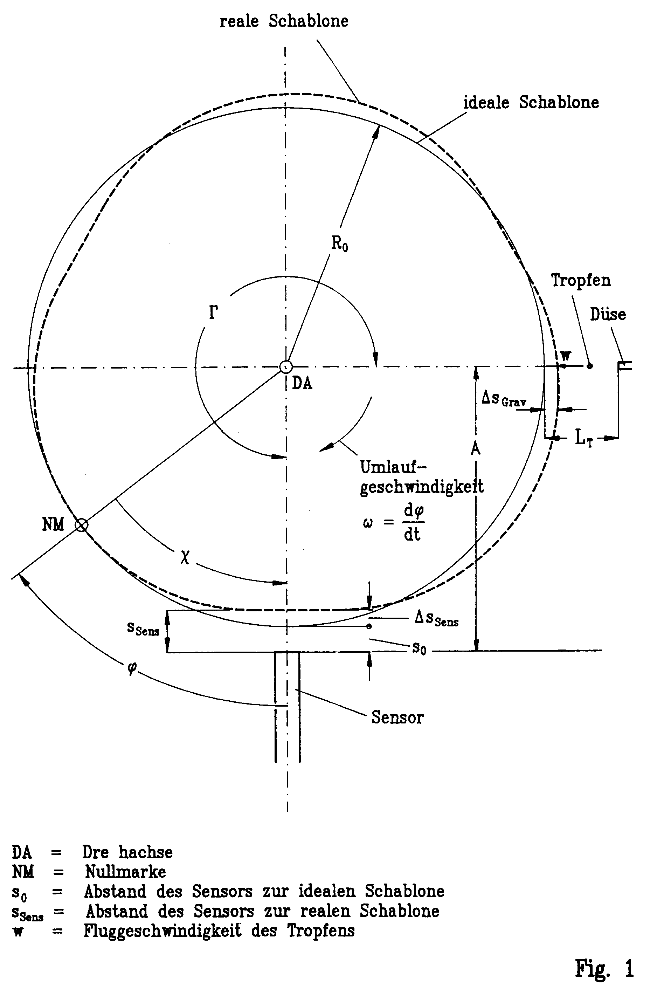

Zur geometrischen Beschreibung der Fehler ist es notwendig, geeignete Koordinaten bezüglich der Schablone und der Meßvorrichtung zu vereinbaren. Jede Schablone trägt irgendwo auf ihrem Umfang eine Nullmarke NM oder eine Passermarke, deren Lage zunächst zwar willkürlich festgelegt wird, die aber fest mit der Schablone verbunden beleibt. Das mit der Schablone ebenfalls fest verbundene Polarkoordinationssystem kann mittels dieser Marke so definiert werden, wie dies in der Figur 1 erläutert ist:

-   Der Ursprung des Koordinatiensystems K.S. liegt auf der Drehachse DA der Schablone.
-   Die Radienrichtung steht normal zu dieser Drehachse DA.
-   Der Winkel $\chi = 0$ ist durch die Verbindung mit der 0-Marke NM gegeben.
-   Die Orientierung der Winkelkoordinate $\chi$ ist eine solche, daß die Werte für $\chi$ positiv zu zählen sind, wenn sie gegen die Drehrichtung der Schablone weisen.

Die Winkellage $\varphi$ der sich drehenden Schablone gegenüber dem Sensor wird zwischen diesem und der auf der Schablone angebrachten Nullmarke NM gemessen. Unter diesen Voraussetzungen gilt

$$\varphi = \chi. \tag{1}$$

Bei allen Gravurmaschinen ist zur Messung des Drehwinkels $\varphi$ ein Winkelimpulsgeber (Encoder) vorgesehen, der einen mit der Lage der Nullmarke übereinstimmenden Nullimpuls abgibt und außerdem den Winkel einer vollen Umdrehung (360 Grad = $2\,\pi$) in $N_{um}$ Impulse unterteilt. Der $N_{um}$-te Impuls der vorhergehenden Umdrehung wird deckungsgleich mit dem nullten Impuls der nachfolgenden Umdrehung abgegeben. Zur Umrechnung vom Drehwinkel $\varphi$ auf den k-ten Impuls und umgekehrt lassen sich die Relationen bilden:

$$\varphi = \frac{k}{N_{um}}.2.\pi \qquad \text{oder} \qquad k = \frac{\varphi}{2.\pi}.N_{um}$$

$$(2)$$

wenn der Winkel $\varphi$ in Radianten gemessen wird bzw.

$$\varphi = \frac{k}{N_{um}}.360 \qquad \text{oder} \qquad k = \frac{\varphi}{360}.N_{um} \qquad (3)$$

wenn dieser in Grad gemessen wird.

Da k nur ganzzahlig sein kann, ist es bei dieser Winkelmeßtechnik notwendig, sich auf diskrete aber durchaus feinstufige Winkelschritte für $\varphi$ zu beschränken.

Die Beschreibung des Fehlerbilds erfolgt am besten so, daß man die über eine Umdrehung der Schablone auftretenden Abweichungen des Radius der realen Schablone gegenüber einer idealen Schablone, d. h. einer kreiszylindrischen und konzentrisch zur Drehachse gelagerten Schablone mit dem konstanten Radius $R_0$ in eine Fourier-Reihe entwickelt.

$$R(\chi) = R_0 + \sum_{i=1}^{m} a_i.\cos(i.\chi) + b_i.\sin(i.\chi) = R_0 + \sum_{i=1}^{m} c_i.\cos(i.\chi + \varepsilon_i)$$

$$(4)$$

Dies ist die Darstellung des Schablonenradius in dem definierten schablonenfesten Koordinatensystem. Der vom Sensor gemessene Abstand zu der sich drehenden realen Schablone ist dann $s(\chi) = A - R(\chi)$ und mit Verwendung der Winkellage $\varphi$ zwischen Nullmarke und Sensor wird wegen (1)

$$s_{sens}(\varphi) = \underbrace{A - R_0}_{s_0} - \sum_{i=1}^{m}[a_i.\cos(i.\varphi) + b_i.\sin(i.\varphi)] = A - R_0 - \sum_{i=1}^{m} c_i.\cos(i.\varphi + \varepsilon_i)$$

$$= s_0 - \sum_{i=1}^{m} c_i.\cos(i.\varphi + \varepsilon_i)$$

$$(5)$$

In dieser Darstellung ist das Reihenglied nullter Ordnung $S_0$ der Abstand des Sensors von der idealen Schablone. Das Glied erster Ordnung $C_1$ entspricht einer einfachen Exzentrizität des Mittelpunkts des gerade vermessenen Querschnittkreises der Schablone. $C_1$ kann auch bei einem genau kreiszylindrischen Querschnitt eine beträchtliche Größe haben. Betrachtet man für einige in Längsrichtung aufeinanderfolgende Querschnitte der Schablone die Fourierreihenentwicklung für den Schablonenradius, dann entsprechen die jeweils für diese Querschnitte geltenden Glieder erster Ordnung einer Abweichung der Längsachse der Schablone von einer Geraden und stellen somit eine Verbiegung der Längsachse dar. Zu bemerken ist, daß dieser Verbiegung nicht durch einen auf die Innenseite der Schablone einwir-

5

kenden Druck entgegengewirkt werden kann. Das Reihenglied zweiter Ordnung entspricht einer Abweichung des Querschnitts im Sinne eines Ovals und kann bereits durch geringe Druckwirkungen auf die Schabloneninnenseite gegen Null geführt werden. Das Reihenglied dritter Ordnung entspricht einer Abweichung des Schablonenquerschnitts von der Rundheit im Sinne eines Dreiecks und kann ebenfalls durch einen Innendruck ausgeglichen werden. Ähnliches gilt für alle folgenden Abweichungen höherer Ordnung. Der Ausgleich der Rundheitsabweichungen erfordert jedoch einen desto höheren Innendruck, je höher die Fourierordnung der Abweichung ist. Es läßt sich zeigen, daß die Rundheitsabweichungen nur durch einen unendlich hohen Innendruck vollständig auf Null zurückgeführt werden können. Bei einem endlichen Innendruck verbleibt ein Restfehler, der proportional zur Amplitude $c_i$ des Fehlerreihenglieds ist, welches bei einer Schablone ohne Innendruck festgestellt werden kann.

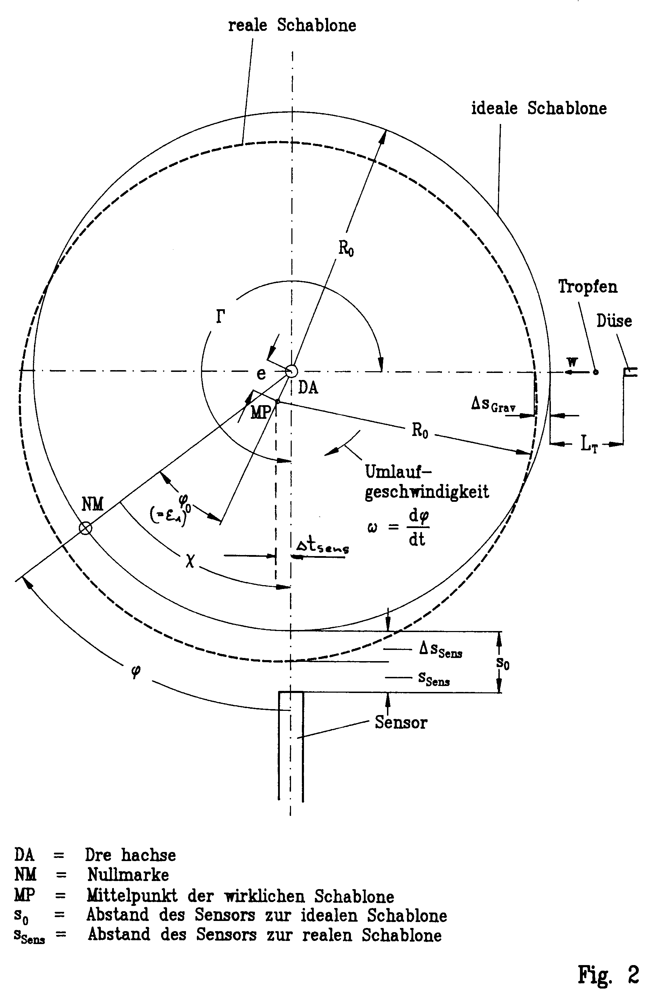

**I. Messung und Verarbeitung des Rundlauffehlers bei einer durch Innendruck stabilisierten und ausgerundeten Schablone (Fig. 2):**

Es wird jetzt vorausgesetzt, daß eine Rundschablone vorliegt, die durch einen auf ihre Innenseite wirkenden Druck weitgehend ausgerundet ist und wegen dieses Innendrucks auch nicht schwingt. Die Stabilisierung durch Innendruck kann man etwa folgendermaßen erklären. Schwingungen einer dünnen kreiszylindrischen Membran erfolgen so, daß die durch die Membran umrandete Querschnittsfläche dann genau kreisrund und daher ein Maximum ist, wenn der Momentanwert der Schwingungsausschläge gerade durch Null läuft. Jede durch eine Schwingung bedingte Abweichung verringert den Innenquerschnitt der Schablone, wodurch das im Inneren der Schablone befindliche Gas entweder adiabatisch komprimiert wird oder es wird dieses Gas durch eine geringe Drucksteigerung veranlaßt, schneller durch bereits offengelegte Bohrungen aus der Schablone zu strömen. Dem Schwingungsvorgang wird dadurch Energie entzogen, was bedeutet, daß Schwingungen der dünnen Membran durch das Gaspolster im Schabloneninnenraum bedämpft werden. Diese Aussage gilt aber nicht für Biegeschwingungen der Schablone, bei welchen die einzelnen Querschnitte der Schablone kreisförmig bleiben. Diesen Schwingungen wird nur durch die innere Materialdämpfung entgegengewirkt. Jedoch liegt zufolge des großen Flächenträgheitsmoments der Schablonenquerschnitte und der geringen Masse der Schablone die Frequenz der Biegeeigenschwingung von vornherein so hoch, daß ihre Schwingungsform kaum angeregt wird.

Bei einer Schablone, aufwelche ein Innendruck einwirkt, wird man im wesentlichen als verbleibende Rundlauffehler nur noch jene feststellen, die durch die Verbiegung der Schablonenachse, d. h. die Exzentrizitäten der einzelnen Querschnitte der Schablone, bedingt sind. Diese Schlagfehler verursachen beim Gravieren der realen Schablone geometrische Fehler in dem erzeugten Musterbild, das heißt Abweichungen der Lage und der Form des Musterbilds gegenüber einem solchen, welches auf einer idealen, schlagfrei laufenden und genau kreiszylindrischen Schablone graviert würde. Diese geometrischen Fehler bestehen aus einer Verschiebung der Lage des Gravurbilds in Umfangsrichtung. Diese Verschiebung hat zwei Ursachen. Erstens liegen wegen der Unrundheiten und Exzentrizitäten der Schablonenquerschnitte innerhalb gleich großer Winkelabschnitte verschiedene Umfangslängen. Dies bedingt eine Umfangsfehllage des Musters, die ab nun Umfangsfehllage erster Art genannt werden soll. Zweitens treffen die aus der Düse ausgestoßenen Tropfen bei unterschiedlichen Abständen der Schablonenwand von der Düse zu früh oder zu spät auf der Schablonenwand auf, und dies bedingt einen weiteren Anteil der Umfangsfehllage des Musters, der Umfangsfehllage zweiter Art heißen soll.

Unter Zugrundelegung der Bezeichnungen der Figur 2 folgt aus Gleichung (5) für die Abstandsänderung der Schablonenwand der realen Schablone gegenüber der idealen Schablone am Ort des Sensors

$$\Delta S_{sens} = S_0 - S_{sens}(\varphi) = c_1 \cdot \cos(\varphi - \varepsilon_1) \tag{6}$$

Hat sich die Schablone gegenüber der in Figur 2 gezeigten Momentanlage um den Winkel $\Gamma$ weitergedreht, dann muß dieser Fehler bei der Ausbringung von Flüssigkeitstropfen aus einer Düse berücksichtigt werden. Aus einer unmittelbaren geometrischen Überlegung anhand dieser Figur 2 folgt für die radiale Abstandsänderung auch

$$\Delta S_{sens} = e \cdot \cos(\varphi - \varepsilon_1) \tag{7}$$

Für die tangentiale Verlagerung der Wandung der realen Schablone gegenüber der idealen Schablone erhält man auf gleiche Weise:

$$\Delta t_{sens} = e \cdot \sin(\varphi - \varepsilon_1) \tag{8}$$

Man erkennt aus einem Vergleich mit (6), daß die Exzentrizität e der Amplitude $c_1$ entspricht. Für eine geometrisch richtige Musteraufbringung muß sowohl die radiale als auch die tangentiale Fehllage der Schablonenwand berücksichtigt werden. Es entsteht sonst aus der tangentialen Fehllage der Schablonenwand die Umfangsfehllage erster Art des Musters. Aus der radialen Fehllage der Schablonenwand entsteht zufolge der Fluggeschwindigkeit der Flüssigkeitskeits-

tropen, welche ungefähr der Umfangsgeschwindigkeit der Schablone entspricht, eine weiter Umfangsfehllage des Musters, nämlich die Umfangsfehllage zweiter Art.

In den Gleichungen (7) und (8) scheint neben dem Drehwinkel $\varphi$ noch der Winkel $\varepsilon_1$ auf. Dieser Winkel bezeichnete in den Fourierentwicklungen (4) und (5) die Phasenlage des Maximums des ersten Reihenglieds. Wie leicht aufgrund der in Figur 2 dargestellten geometrischen Verhältnisse einzusehen ist, entspricht diese Phasenlage dem Winkel $\varphi 0$, welchen die Verbindungsgerade vom Mittelpunkt des realen Schablonenquerschnitts zum Drehpunkt und die Verbindungsgerade von der Nullmarke zum Drehpunkt miteinander einschließen.

Die Gleichungen (7) und (8) lassen auch erkennen, daß die Schwankung der Ortslage eines Punkts am Schablonenumfang in tangentialer Richtung gegenüber der Schwankung der Schablonenwand in radialer Richtung um einen Drehwinkel von 90 Grad oder - was im Prinzip gleichbedeutend ist - um $N_{um}/4$ Encoderimpulse voreilt. Die letzte Aussage bedeutet aber, daß die Größe der zu erwartenden Musterfehllage erster Art um 1/4 Umdrehung der Schalbone früher als die zugehörige radiale Abstandsschwankung gemessen und gespeichert wird. Mit anderen Worten, befindet sich auf einem Speicherplatz mit der Adresse k für einen Punkt des Schablonenumfangs dessen radiale Fehllage, dann wurde auf dem Speicherplatz mit der Adresse k - $N_{um}/4$ die Umfangsfehllage erster Art eines anzubringenden Musters gegenüber dem entsprechenden Punkt der idealen Schablone abgelegt.

Überlegt man, daß an der Gravurstelle, das ist die Stelle, an welcher die Flüssigkeitstropfen auftreffen, unter den hier geltenden Voraussetzungen die gleichen Abstands- und Umfangsschwankungen wie bei dem Sensor auftreten, dann läßt sich folgende Regel aufstellen, um Gravurschwankungen weitgehend auszugleichen:

- Um Fehler im Musterbild einer mit einer Exzentrizität e umlaufenden aber sonst kreiszylindrischen Schablone auszugleichen, muß zunächst der radiale Abstand $s_{Sens}$ mittels eines Abstandssensors gemessen werden. Es wird hieraus der Differenzwert $\Delta s_{Sens} = s_0 - s_{Sens}$ gebildet und dieser Wert wird auf dem Speicherplatz k abgelegt. Dieser Wert wird nach weiteren

$$N_\Gamma = N_{um}.\Gamma/2.\pi - L_T.\omega.N_{um}/(w.2.\pi) \tag{9}$$

vom Encoder empfangenen Impulsen wieder vom Speicherplatz k ausgelesen und für die Ermittlung der Umfangsfehllage zweiter Art herangezogen. Der erste Summand in der Beziehung (9) entspricht jener Impulszahl, die der Encoder zwischen dem Zeitpunkt des Erscheinens einer Umfangsstelle beim Sensor und jenem ihres Erscheinens an der Tropfenauftreffstelle abgibt. Dieser Zeitpunkt wäre aber für eine Korrekturetnscheidung bereits zu spät. Diese Entscheidung muß um die Flugzeit $L_T$/w der Tropfen vom Düsenmund bis zur Schablone vorverlegt werden, also muß das Auslesen der Abstandsdifferenzen früher erfolgen. Diese kleinere Impulszahl wird durch die Beziehung (9) angegeben. Der gemessene Abstand $s_{Sens}$ bzw. der hieraus berechnete Diferenzwert $\Delta s_{Sens} = s_0 - s_{Sens}$ ist positiv, wenn die reale Lage der Schablonenwand gegenüber ihrer idealen Lage näher zum Sensor bzw. zur Düse rückt. Umgekehrt wird dieser Differenzwert negativ, wenn die Schablonenwand vom Sensor oder von der Düse abrückt. Rückt die Wand näher zur Düse, dann treffen die Tropfen - wenn keine Korrektur erfolgt - zu früh auf der Wand auf, treffen die Schablone also an einem Ort, welcher schon vorübergeeilt sein sollte und der eigentlich entsprechend dem Inhalt eines Speicherplatzes mit niedriger Adresse bemustert hätte werden sollen. Hier soll per Definition die Drehrichtung der Schablone so gewählt sein, daß die Adressen in aufsteigender Folge an der Düse vorbeilaufen. Dreht sich die Schablone mit der Winkelgeschwindigkeit $\omega$, bewegen sich die Tropfen mit der Fluggeschwindigkeit w und wird der Radius R0 der Schablone hier vom Zentrum des Kreisquerschnitts aus gemessen, dann gilt für die Umfangsfehllage zweiter Art des Musters in Längeneinheiten:

$$\Delta t_{D\ddot{u}s,2} < k + N_\Gamma > = (\Delta s_{Sens} <k> / w).R0.\omega \tag{10}$$

Diese Umfangsfehllage muß in Einheiten des Adressenzählers umgerechnet werden, damit der richtige Speicherplatz mit der niedrigen Adresse ermittelt werden kann. Für diese Umrechnung gilt:

$$\Delta z_2 < k+N_\Gamma > = - ( N_{um} / 2.\,\pi\,.\,R0 )\,.\,\Delta t_{Düs,2} < k+N_\Gamma > =$$
$$= - ( N_{um} / 2.\,\pi\,.\,R0 )\,.\,(\Delta s_{Sens} < k > / w )\,.\,R0\,.\,\omega =$$
$$= - \frac{N_{um}}{2.\,\pi}\,.\,\Delta s_{Sens} < k >\,.\,\frac{\omega}{w}$$

$$(11)$$

Die benutzte Schreibweise soll heißen, entnehme dem Speicherplatz k bei Empfang des $\langle k+N_\Gamma \rangle$-ten Impulses $\Delta s_{Sens} \langle k \rangle$ und ermittle hiermit die Adressenzähldifferenz $\Delta Z_2$ $\langle k+N_\Gamma \rangle$, welche bei dem $\langle k+N_\Gamma \rangle$-ten Impuls berücksichtigt werden muß. Das negative Vorzeichen in der Beziehung (10) berucksichtigt den bereits diskutierten Sachverhalt, daß bei positiven Werten von $\Delta s_{Sens} \langle k \rangle$ die Adresse zu erhöhen ist.

Die Umfangsfehllage erster Art ist rein geometrisch bedingt und wurde durch die Beziehung (8) bereits angegeben. Dort wurde auch schon festgestellt, daß der Wert dieser Fehllage bereits $N_{um}/4$ Encoderimpulse früher als die zugehörige Abstandsfehllage vom Sensor vermessen wurde und auf einem Speicherplatz, dessen Adresse um $N_{um}/4$ Zähleinheiten geringer ist, abgespeichert wurde. Es gilt also:

$$\Delta t_{Düs,1} < k+N_\Gamma > = \Delta s_{Sens} < k - N_{um} / 4 >$$

$$(12)$$

Auch diese Beziehung drückt die Fehllage in Längeneinheiten aus. Zur Berechnung des Adressendifferenzwerts muß $\Delta t_{Düs,1} \langle k+N_\Gamma \rangle$ mit dem Faktor $N_{um}/2.\pi.R0$ multipliztier werden.

Dieser Faktor entspricht dem Verhältnis

Encoderimpulse pro Umdrehung / Umfang der Schablone.

Die für die Korrektur der Umfangsfehllage erster Art zu berücksichtigende Adressendifferenz folgt dann zu

$$\Delta z_1 < k+N_\Gamma > = ( N_{um} / 2.\,\pi\,.\,R0 )\,.\,\Delta t_{Düs,1} < k+N_\Gamma > =$$
$$= ( N_{um} / 2.\,\pi\,.\,R0 )\,.\,\Delta s_{Sens} < k - N_{um} / 4 >$$

$$(12a)$$

Unterschiedlich gegenüber der Beziehung (10) ist das Vorzeichen. Ist nämlich die Abstandsdifferenz $\Delta s_{Sens}$ $\langle k-N_{um}/4 \rangle$ positiv, dann eilt die Schablone vor, d. h. es liegt an der Tropfenauftreffstelle ein Ort der Schablonenwand vor, welcher entsprechend dem Inhalt einer höheren Adresse des Musterspeichers zu bemustern ist. Die Beziehung (12a) sagt aus: Bei Empfang des $\langle k+N_\Gamma \rangle$-ten Impulses entnehme dem Speicherplatz $\langle k-N_{um}/4 \rangle$ den dort abgespeicherten Wert $\Delta s_{Sens}$ $\langle k-N_{um}/4 \rangle$ und berechne nach (12a) die Adressendifferenz $\Delta z_1$.

Sind beide Adressdifferenzen $\Delta z_1$ und $\Delta z_2$ gebildet, dann berechne die Adresse $k + N_\Gamma + \Delta z_1 + \Delta z_2$ und behebe aus dieser Adresse des Musterspeiches die korrekte, für eine ideale, rundlauffehlerfreie Schablone gebildete Musterinformation, welche angibt, ob ein Tropfen aus der Düse auszustoßen ist oder nicht.

**II.** <u>Messung und Verarbeitung des Rundlauffehlers bei einer drucklosen Schablone, deren Wand während der Gravurarbeit nicht schwingt</u>

Es wird jetzt eine dünne zylindrische Siebschablone oder ein ebensolcher unperforierter Hohlzylinder betrachtet, deren oder dessen beide Enden durch zwei genau rundlaufende Spannvorrichtungen gehalten wird, und die auf ihrer Innenseite nicht mit einem überhöhten Druck beaufschlagt ist. Es soll jedoch wegen eines hochwertigen Drehantriebs keine Schwingungsanregung der Schablonenwand erfolgen. Bei einer solchen Schablone muß man Rundlauffehler erwarten, deren Fourierdarstellung beträchtliche Werte für Reihenglieder höherer Ordnung enthält. Alle diese Rundlauffehler sind statisch, d. h. sie laufen mit der Schablone um, oder anders ausgedrückt, sie ändern sich nicht in einem schablonenfesten Koordinatensystem. Der Querschnitt einer solchen Schablone wurde bereits in Figur 1 dargestellt.

Auch hier hat die entstehende Umfangsfehllage des Musters zwei Ursachen. Es entsteht eine Umfangsfehllage erster Art, weil gleiche Teilwinkel der Schablone verschiedene Umfangslängen enthalten. Es entsteht ferner die Fehl-

EP 0 792 059 A1

lage zweiter Art, weil Tropfen, welche wegen der Abstandsschwankungen zu früh oder zu spät auf der Schablonenwand auftreffen, sich an falschen Stellen des Schablonenumfangs festsetzen. Auch hier müssen die Fehllagen durch früheres oder späteres Aufrufen der Musterinformation aus dem Speicher des Rechners ausgeglichen werden, oder genauer gesagt, es muß bereits zum Zeitpunkt des Ausstoßens der Tropfen aus der Düse die Musterinformation von einer korrigierten Speicheradresse abgeholt werden.

Zunächst soll die Umfangsfehllage erster Art und weiters die für deren Korrektur notwendige Adressenänderung ermittelt werden. Bei jedem empfangenen Encoderimpuls wird $s_{Sens}$ gemessen. Hat etwa der Rechner gerade den k-ten Impuls empfangen, dann bildet dieser $\Delta s_{Sens}(K) = s_0 - s_{Sens}(k)$ und speichert diesen Wert auf einem Speicherplatz mit der Adresse k. Aus zwei aufeinanderfolgenden Meßwerten $\Delta s_{Sens}(k)$ und $\Delta s_{Sens}(k+1)$ läßt sich dann die Länge des zwischen diesen Meßpunkten liegenen Teilstücks des Schablonenumfangs zu

$$db(k) = \sqrt{\left(\Delta s_{Sens}(k) - \Delta s_{Sens}(k+1)\right)^2 + \left(R_0 + \Delta s_{Sens}(k) + \Delta s_{Sens}(k+1)\right)^2 \cdot \left(\pi/N_{um}\right)^2}$$

$$(13)$$

berechnen.

Durch Aufsummieren dieser Teillängen folgt dann für die zwischen dem Nullimpuls und dem k-ten Impuls befindliche Ist-Länge des Schablonenumfangs:

$$Umf_{ist}(k) = \sum_{i=1}^{k} db(i)$$

$$(14)$$

Der Sollumfang der idealen Vergleichs-Schablone - diese hat den Raduls $R_0$ - bis zu dem k-ten Meßpunkt folgt zu:

$$Umf_{soll}(k) = 2.\pi.\frac{k}{N_{Um}}.R_0$$

$$(15)$$

Die Differenz zwischen diesen beiden Werten sollte dem Verlagerungsfehler des Musters in Umfangsrichtung entsprechen. Da aber stets Einflüsse vorliegen, welche erhebliche Umfangsdifferenzen verursachen. z. B. thermisch bedingte Lageänderungen des Sensors oder ein geringfügig größerer Schablonendurchmesser oder der durch die Aufteilung des Schablonenumfangs in $N_{um}$ Meßstellen bedingte Polygonaleffekt, ist es zweckmäßig, nach jedem vollen Umlauf der Schablone einen Korrekturfaktor zu ermitteln, der während des nachfolgenden Umlaufs für die Berichtigung der Differenzbildung verfügbar ist. Der Korrekturfaktor wird aus

$$K_{korr} = \frac{Umf_{soll}(N_{Um})}{Umf_{ist}(N_{Um})}$$

$$(16)$$

ermittelt. Die Musterfehllage erster Art folgt dann aus der Differenz

$$\Delta U1 = Umf_{soll}(k) - K_{korr}.Umf_{ist}(k) \qquad (17)$$

Die für den Ausgelich der Umfangsfehllage erster Art notwendige Adressenkorrektur wird dann:

9

$$\Delta z_1 <k+N_\Gamma> = (N_{um} / 2 \cdot \pi \cdot R0) \cdot \Delta U1$$

(18)

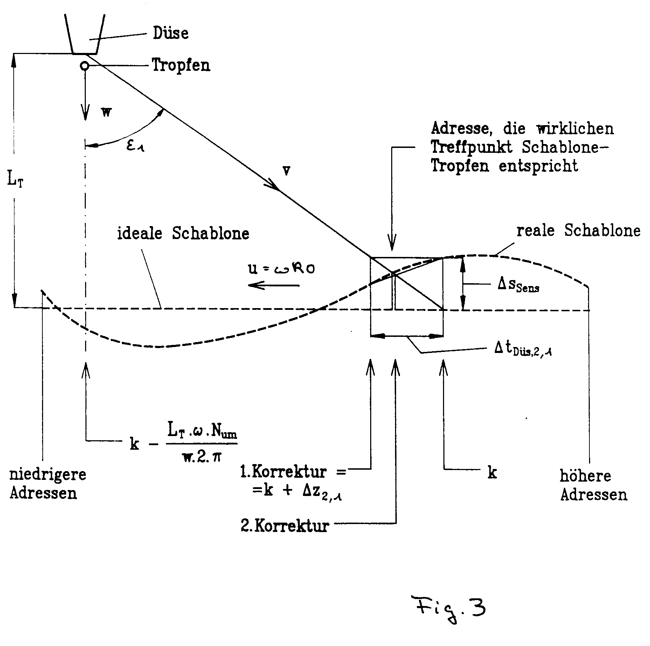

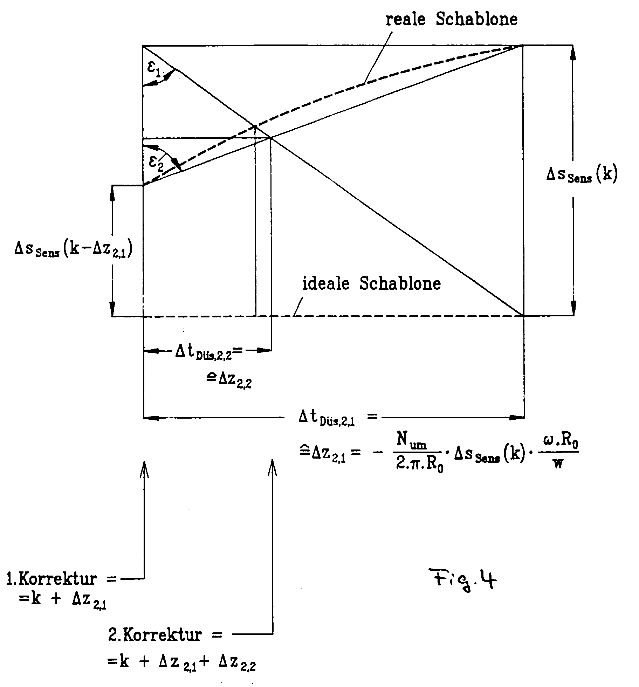

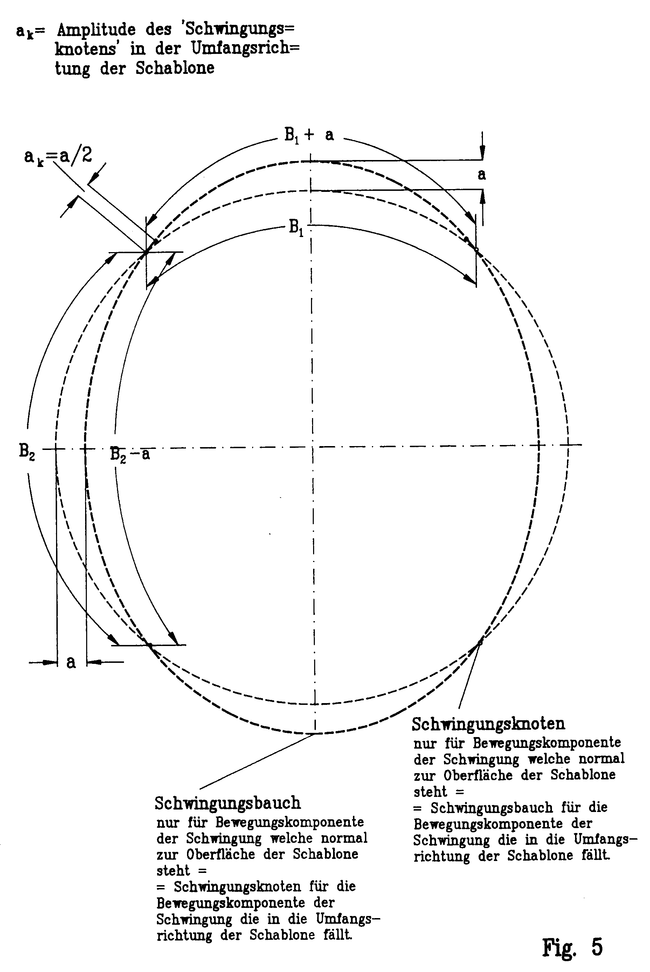

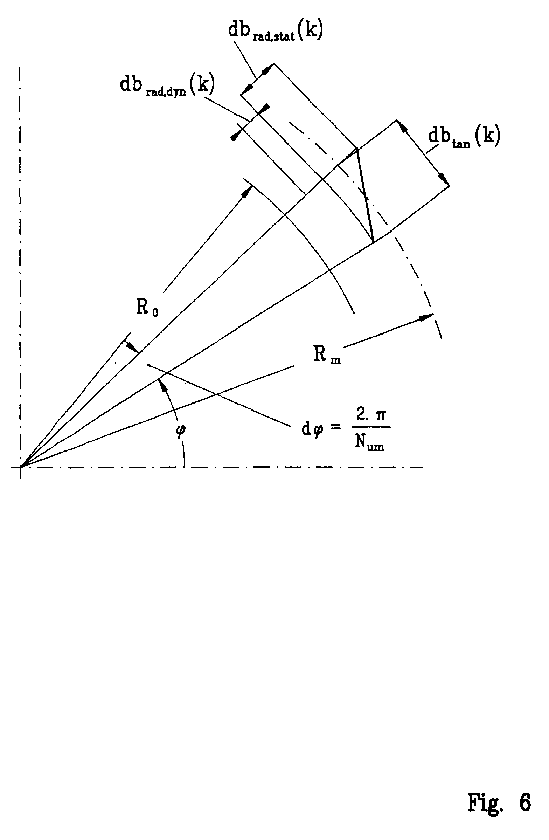

Für den Ausgleich der Umfangsfehllage zweiter Art ist ebenfalls eine Adressenkorrektur zu bilden. Die entscheidende Frage ist, wo der von der Düse ausgestoßene Tropfen die Schablonenoberfläche treffen wid. Zur Beantwortung dieser Frage wird auf die Figur 3 verwiesen.

Damit der Tropfen eine ideale Schablone, also eine Schablone ohne jeden Rundlauffehler, an der Stelle trifft, welche der Adresse k zuzuordnen ist, muß der Tropfen bereits dann ausgestoßen werden, wenn die Schablonenstelle mit der Adresse

$$k - \frac{L_T \cdot \omega \cdot N_{um}}{w \cdot 2 \cdot \pi}$$

der Düse genau gegenüberliegt. Dies gilt, wenn sich die Schablone mit einer Umfangsgeschwindigkeit u dreht und der Tropfen die Düse mit der geschwindigkeit w verläßt. Bezüglich der Schablone hat dann der Tropfen die Relativgeschwindigkeit v.

Wo die reale Schablone vom Tropfen getroffen wird, entnimmt man am besten der Zeichnung (Figur 3). Würde sich der Abstandsfehler $\Delta s_{Sens}$ der realen Schablone gar nicht oder nur wenig ändern, dann entspräche die notwendige Korrektur der Umfangsstrecke $\Delta t_{Düs,2,1}$ und diese erhält man aus der Proportion

$$\Delta t_{Düs,2,1}(k) \Big/ \Delta s_{Sens}(k) = w \Big/ u \quad .$$

Aus $\Delta t_{Düs,2,1}$ (k) folgt dann ein erster Teil der Adressenkorrektur für die Umfangsfehllage zweiter Art durch Umrechnung der Strecke in die Zahl der in ihr enthaltenen Impulse:

$$\Delta z_{2,1}(k) = -\Delta t_{Düs,2,1}(k) \cdot \frac{N_{um}}{2 \cdot \pi \cdot R_0} = -\Delta s_{Sens}(k) \cdot \frac{w}{u} \cdot \frac{N_{um}}{2 \cdot \pi \cdot R_0}$$

(19)

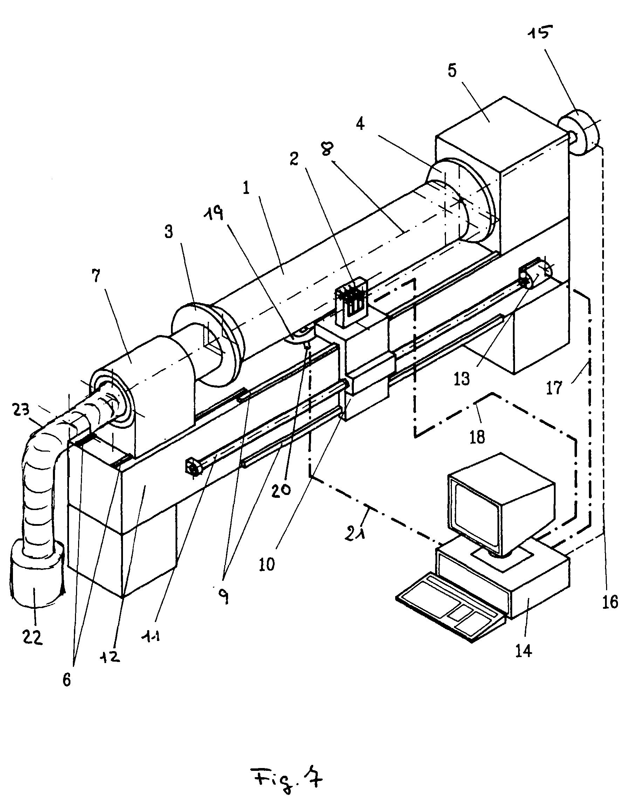

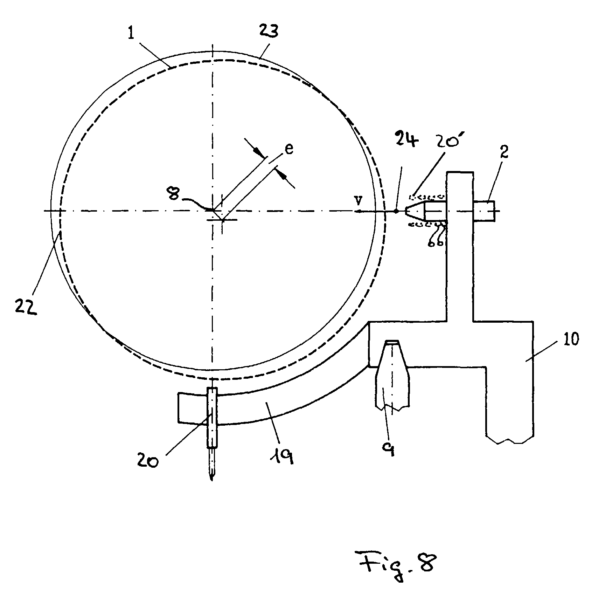

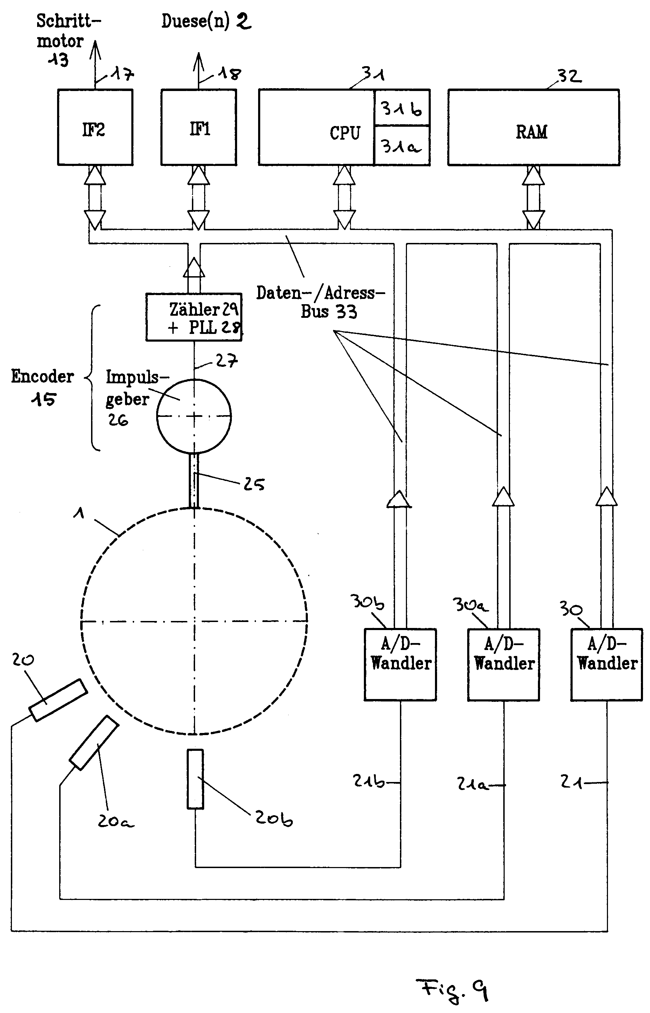

Bei stärkeren Änderungen des Rundlauffehlers in der Umgebung der Auftreffstelle ist die Korrektur aber noch zu ungenau. In Figur 4 wird gezeigt, wie eine weitere Verbesserung erreicht werden kann. Im wesentlichen geschieht dies durch eine Linearisierung des Verlaufs des Abstandsfehlers in der Umgebung der Auftreffstelle des Tropfens auf die Schablone.

$$\Delta z_{2,2}(k) = \frac{\Delta s_{Sens}(k) - \Delta s_{Sens}(k - \Delta z_{2,1}(k))}{2 \cdot \Delta s_{Sens}(k) - \Delta s_{Sens}(k - \Delta z_{2,1}(k))} \cdot \Delta t_{Düs,2} \cdot \frac{N_{um}}{2 \cdot \pi \cdot R_0}$$

(20)

Es folgt schließlich für die endgültige Korrektur

$$\Delta z_2(k) = \Delta z_{2,1}(k) + \Delta z_{2,2}(k)$$

und unter Verwendung von (19) und (20) entsteht hieraus

$$\Delta z_2 \langle k + N_\Gamma \rangle = - \frac{\left(\Delta s_{Sens}(k)\right)^2}{2.\Delta s_{Sens}(k) - \Delta s_{Sens}\left(k - \Delta z_{2,1}(k)\right)} \cdot \frac{w}{u} \cdot \frac{N}{2 \cdot \pi \cdot R_0}$$

$$(21)$$

In dem jetzt vorliegenden Fall lauten die für die Vermeidung von Gravurfehlern anzuwendenden Regeln:

- Bilde bei dem k-ten eingehenden Encoderimpuls den Adressenkorrekturwert $\Delta z_1(k)$ entsprechend der Beziehung (17) und (18) und speichere diesen Wert auf einem Speicherplatz $\Delta z_1(k)$. Bei dem $\langle k + N_\Gamma \rangle$-ten Impuls behebe den Wert.
- Bilde bei dem k-ten eingehenden Encoderimpuls den Wert $\Delta z_2(k)$ entsprechend den Beziehungen (19) bis (21) und speichere diesen Wert auf einem Speicherplatz $\Delta z_2(k)$. Bei dem $\langle k + N_\Gamma \rangle$-ten Impuls behebe auch diesen Wert.
- Addiere beide Adressenkorrekturwerte $\Delta z_1$ und $\Delta z_2$ zu der Adresse k, bilde also $k + \Delta z_1 + \Delta z_2$ und behebe aus dieser Adresse des Musterspeichers jene Musterinformation, nach welcher die Schablone zu gravieren ist, um die Musterfehllage auszugleichen, welche sonst durch den Rundlauffehler entstehen würde.

Im Zusammenhang mit Figur 4 gelten ferner

$$\tan(\varepsilon_1) = \frac{\Delta t_{Düs,2,1}}{\Delta s_{Sens}(k)}$$

$$(21a)$$

$$\tan(\varepsilon_2) = \frac{\Delta t_{Düs,2,1}}{\Delta s_{Sens}(k) - \Delta s_{Sens}(k + \Delta z_{2,1})}$$

$$(21b)$$

$$\frac{\Delta t_{Düs,2,2}}{\tan(\varepsilon_1)} + \frac{\Delta t_{Düs,2,2}}{\tan(\varepsilon_2)} = \Delta s_{Sens}(k) - \Delta s_{Sens}(k + \Delta z_{2,1})$$

$$(21c)$$

Hieraus folgt:

$$\Delta t_{Düs,2,2} = \frac{\Delta s_{Sens}(k) - \Delta s_{Sens}(k+\Delta z_{2,1})}{2.\Delta s_{Sens}(k) - \Delta s_{Sens}(k+\Delta z_{2,1})} \cdot \Delta t_{Düs,2,1}$$

$$= \frac{\Delta s_{Sens}(k) - \Delta s_{Sens}(k+\Delta z_{2,1})}{2.\Delta s_{Sens}(k) - \Delta s_{Sens}(k+\Delta z_{2,1})} \cdot \Delta s_{Sens}(k) \cdot \frac{\omega.R_0}{w} \qquad (21d)$$

.

$$\Delta z_{2,2} = \Delta t_{Düs,2,2} \cdot \frac{N_{um}}{2.\pi.R_0} \qquad (21e)$$

III. <u>Messung und Verarbeitung des Rundlauffehlers bei einer drucklosen Schablone, die durch Störungen zu Schwingungen des dünnen Hohlzylindermantels angeregt wird.</u> Als letzter Fall wird eine Schablone betrachtet, die auf ihrer Innenseite nicht mit einem Druck beaufschlagt ist, und die durch zeitlich veränderliche äußere Kräfte zu Schwingungen angeregt wird. In diesem Fall mißt ein erster Abstandssensor (es müssen später noch weitere Sensoren eingeführt werden) einen Abstand, für dessen zeitabhängige Änderungen zwei verschiedene Ursachen maßgebend sind. Die erste Ursache ist die statische Rundlaufabweichung. Diese liegt als Funktion R ($\chi$) über den Umfang der Schablone vor und ist durch (4) definiert. Der Winkel $\chi$ wird von einer am Schablonenumfang angebrachten Nullmarke aus gemessen, und zwar in einem Polarkoordinatensystem, welches fest mit der Schablone verbunden ist und dessen Ursprung auf der Schablonenachse liegt. Dieser Winkel soll positiv in jener Richtung gezählt werden, welche der Drehrichtung entgegengesetzt ist. Da sich die Schablone mit der Winkelgeschwindigkeit $\omega$ dreht, bewegen sich die statischen Rundlaufabweichungen mit der Umfangsgeschwindigkeit R $\cdot$ $\omega$ an dem Sensorvorbei. Ferner soll eine Winkellage $\varphi$ der Schablone gegenüber der Position des ersten Sensors definiert werden, und zwar am besten so, daß dieser Winkel zwischen der Nullmarke und dem ersten Sensor gemessen wird.

Für $\varphi$ gilt dann

$$\varphi = \omega \cdot t \qquad (22)$$

Mit dieser Beziehung ist auch der Zeitpunkt t = 0 definiert. Dieser ist dadurch bestimmt, daß sich die Nullmarke gerade an der Position des ersten Sensors vorbeibewegt. Den zuvor beschriebenen Abstandsänderungen überlagern sich Abstandsvariationen, die auf die Schwingung der Schablone zurückzuführen sind, und dieses ist die zweite Ursache für die vom Sensor gemessenen zeitveränderlichen Abstände. Die Zeitabhängigkeit dieses zweiten Anteils der Abstandsänderung ist auch der Grund, welcher es nahelegt, hier die Zeit t in die Überlegungen einzubinden. Um die Verhältnisse nicht übermäßig zu komplizieren, soll angenommen werden, daß die dünne Schablone nur mit *einer* Frequenz schwingt. Außerdem soll der Maximalwert der Schwingungsamplitude während der Beobachtungszeit konstant bleiben. Dieser Fall wird der in der Praxis wichtigste Fall sein, denn es ist anzunehmen, daß die Schwingungsanregung durch die Drehbewegung der Schablone verursacht wird und die Schwingungsfrequenz daher der Drehzahl oder einem Vielfachen derselben entspricht. Die stets vorhandene Materialdämpfung bewirkt nach kurzer Einschwingzeit einen stationären Schwingungszustand. Zu den Abstandsänderungen aufgrund der statischen Rundlauffehler (Beziehungen (4), (5)) muß daher noch ein Schwingungsanteil addiert werden. Es gilt dann für die von einem ersten Sensor gemessene Rundheitsabweichung:

$$s_{sens,1}(\varphi) = A - R_0 \; - \sum_{i=1}^{N_{um}/2} \left[ a_i.\cos(i.\varphi) + b_i.\sin(i.\varphi) \right] \; +$$

$$+ \, c_{dyn}.\sin(n.\varphi + \Phi) \, . \, \cos(\kappa.t + \Theta)$$

$$(23)$$

Das zur Beziehung (5) hinzugefügte Glied

$$c_{dyn}.\sin(n.\varphi + \Phi).\cos(\kappa.t + \theta) \tag{24}$$

besteht, wie dies bei schwingenden Kontinua bekannt ist, aus drei Faktoren, nämlich einer Amplitude $c_{dyn}$ der Ortsfunktion $\sin(n.\varphi + \Phi)$ und der zeitabhängigen Funktion $\cos(\kappa.t + \theta)$. Hierin bedeutet $c_{dyn}$ den maximalen Schwingungsausschlag der Schablone, also die Amplitude an den Stellen der Schwingungsbäuche. n ist die Zahl der Schwingungsbäuche entlang des Umfangs der Schablone und wird im allgemeinen auch als Ordnung oder Teilordnung der Schwingung bezeichnet. $\Phi$ ist der unbekannte Winkelabstand zwischen dem nächstgelegenen Schwingungsknoten auf der Schablone und der Nullmarke. $\theta$ ist der ebenfalls unbekannte, in einen Phasenwinkel umgerechnete Zeitabstand $T_0$ des letzten Maximalausschlags der Schwingung vom Zeitpunkt t = 0 und es gilt $\theta = T_0.\kappa$. Schließlich bedeutet $\kappa$ die Kreisfrequenz der Schwingung.

Für das Verständnis des additiven Glieds (24) ist es zweckmäßig, einen sensorfesten Beobachtungsstandpunkt einzunehmen und das Schwingungsbild der Schablone (also ihre Bäuche und Knoten) in seiner Umfangslage so zu betrachten, als ob es fest mit den übrigen Formfehlern der Schablone verbunden wäre. Aber im Gegensatz zu den statischen Formfehlern, deren Größe sich nicht mit der Zeit ändert, pulsieren die Schwingungsbäuche im Takt der Schwingfrequenz und gleichzeitig bewegt sich dieses pulsierende Gebilde am Sensor vorbei, wenn sich die Schablone dreht. Noch eine weitere Bemerkung zu der Ordnung n der Schwingung. Diese Ordnung n bezieht sich auf die Zahl der Schwingungsbäuche am Umfang der Schablone: die Anzahl der Bäuche in der Achsrichtung interessieren hier nicht. n = 1 bedeutet, daß nur ein einziger Schwingungsbauch am Umfang auftritt und mit der Schablone umläuft. Dies entspricht einer Biegeschwingung der Schablone, wie sie etwa in der Nähe einer kritischen Drehzahl beobachtet werden kann. Aus der Mechanik ist bekannt, daß auch bei der Biegeschwingung der Schwingungsbauch mit der Drehung der Welle umläuft. Bei n = 2 schwingt die Schablone so, daß sich ein Oval als Schwingungsform ausbildet und bei n = 3 ist die Schwingungsform ein Dreieck. Schwingt die Schablone mit n = 2 als Oval, dann würde ein mit dem Schablonensystem rotierender Beobachter einen Ring sehen, der einmal in einer Richtung und in der nächsten Halbperiode in der dazu senkrechten Richtung den größeren Durchmesser aufweist. Ein Abstands-Sensor mißt natürlich nur einen zeitlich veränderlichen Abstand zu diesem umlaufenden und zugleich schwingenden Gebilde. Im allgemeinen muß die Schablone nicht gerade dann maximal ausschlagen, wenn der Schwingungsbauch am Sensor vorbeiläuft. Aus diesem Grunde darf man erwarten, daß es mit einem einzigen Sensor nicht möglich ist, den Schwingungszustand der Schablone zu erfassen und schon gar nicht diesen von den Formfehlern trennen zu können. Zu der gleichen Schlußfolgerung kann man auch durch Betrachtung der Beziehung (23) gelangen. Man verfügt nach einer Vermessung eines vollständigen Schablonenumfangs zwar über $N_{um}$ Meßwerte, muß aber mit diesen die $N_{um}$ Koeffizienten $a_i$ und $b_i$ (i = 0, 1, ..., $N_{um}/2$) der Fourier-Reihenglieder in (23) bestimmen. Für die Ermittlung der unbekannten Parameter des dynamischen Glieds (24) bleiben dann keine Bestimmungsgleichungen mehr übrig.

Es soll daher unter einem Winkel $\alpha$ vom ersten Sensor, der die Abstände zur Schablonenwand gemäß der Beziehung (23) erfaßt, ein zweiter Sensor angeordnet werden. Ein auf diesem Sensor positionierter Beobachter B2 würde die gleiche schwingende Schablone, also deren Fehler, Schwingungsbäuche und Schwingungsknoten sehen wie ein Beobachter B1 auf dem ersten Sensor (Figur 5). Es soll nun angenommen werden, daß der Beobachter B1 zu einem beliebigen Zeitpunkt t während einer Umdrehung eine Aufnahme des Momentanzustandes der Schablone macht und die Winkelabstände zu den Schwingungsbäuchen und den Knoten registriert. Würde der Beobachter B2 zum gleichen Zeitpunkt ebenfalls den Momentanzustand der Schablone ausmessen, dann würde er zwar die gleichen Ausschläge der Schwingungsbäuche, aber andere relative Winkellagen zu seiner Position feststellen. Letztere unterscheiden sich nämlich um den Winkel $\alpha$ von der Momentanaufnahme des Beobachters B1. Wartet aber der Beobachter B2 jenes Zeitintervall $\Delta t = \alpha/\omega$ ab, welches die Schablone benötigt, um sich genau um den Winkel $\alpha$ zu drehen, sieht der Beobachter B2 die gleichen relativen Momentanlagen der Schwingungsbäuche und - knoten, aber andere Momentanwerte der Schwingungsausschläge. Letztere ergeben sich entsprechend der Beziehung (24) zu dem späteren Zeitpunkt

$$t + \Delta t = t + \alpha/\omega \; \text{zu} \; c_{dyn}.\sin(n.\varphi + \Phi).\cos(\kappa.(t + \alpha/\omega) + \theta) \tag{26}$$

Die Beziehung (23) hat für den Abstand des ersten Sensors von der Schablonenwand zum Zeitpunkt t gegolten, entsprechend gilt für den Abstand des zweiten Sensors zur Schablonenwand völlig gleichartig, jedoch zum späteren Zeitpunkt t + $\alpha/\omega$ die Beziehung

$$s_{sens,2}(\varphi) = \underbrace{A - R_0}_{s_0} \; - \; \sum_{i=1}^{N_{um}/2} \left[ a_i.\cos(i.\varphi) + b_i.\sin(i.\varphi) \right] \; + $$
$$+ c_{dyn}.\sin(n.\varphi + \Phi).\cos(\kappa.(t + \alpha/\omega) + \Theta)$$

$$(27)$$

In (27) bezeichnet $\varphi$ wieder den gleichen Drehwinkel der Schablone wie in (23). Mit diesen Beziehungen (23) und (27) sind jene Gleichungen erarbeitet, die notwendig sind, um zu überlegen, ob es mit den Meßergebnissen von zwei Sensoren schon möglich ist, die Abstände der Schablonenwand zu einem beliebigen Beobachter oder Bauteil, etwa der Optik, genau vorherzusagen. Dieser Beobachter soll fest mit einem Sensorsystem verbunden sein, aber einen beliebig vorgegebenen Winkel zu diesem an der Peripherie der drehenden Schablone einnehmen.

Die Beziehungen (23) und (27) werden nochmals angeschrieben, jedoch wird durch eine geeignete Schreibweise der linken Seite besser hervorgehoben, daß es sich um zwei verschiedene Abstände handelt, die durch zwei verschiedene Sensoren zu zwei verschiedenen Zeitpunkten gemessen werden.

$$\Delta s_{sens,1}(t) = a_0 \; + \; \sum_{i=1}^{N_{um}/2} \left[ a_i.\cos(i.\varphi) + b_i.\sin(i.\varphi) \right] \; + $$
$$+ c_{dyn}.\sin(n.\varphi + \Phi).\cos(\kappa.t + \Theta) \qquad (23a)$$

$$\Delta s_{sens,2}(t + \Delta t) = a_0 \; + \; \sum_{i=1}^{N_{um}/2} \left[ a_i.\cos(i.\varphi) + b_i.\sin(i.\varphi) \right] \; + $$
$$+ c_{dyn}.\sin(n.\varphi + \Phi).\cos(\kappa.(t + \alpha/\omega) + \Theta) \qquad (27a)$$

Bildet man nun die Differenz dieser Meßergebnisse, und führt man anstelle der Zeit gemäß (22) die Winkelkoordinate $\varphi$ ein ($t = \varphi/\omega$), so entfallen die statischen Fehleranteile durch Subtraktion und man erhält für das Differenzsignal

$$D_{21} = \Delta s_{sens,1}(t) - \Delta s_{sens,2}(t + \Delta t) = $$
$$= c_{dyn}.\sin(n.\varphi + \Phi).\left[ \cos\left( \varphi.\frac{\kappa}{\omega} + \Theta \right) - \cos\left( \varphi.\frac{\kappa}{\omega} + \alpha.\frac{\kappa}{\omega} + \Theta \right) \right],$$

$$(28)$$

Man muß nun versuchen, die den dynamischen Fehleranteil charakterisierenden Parameter dieser Beziehung zu bestimmen. Um die physikalische Aussage der Beziehung (28) besser offenzulegen, bildet man zwei Hilfsgrößen $\varepsilon$ und $\eta$, für die gelten soll

$$\cos(\varepsilon) = \eta \cdot \left[ 1 - \cos\left( \frac{\kappa}{\omega} \cdot \alpha \right) \right] \tag{29a}$$

und

$$\sin(\varepsilon) = \eta \cdot \sin\left( \frac{\kappa}{\omega} \cdot \alpha \right) \tag{29b}$$

Man erhält dann aus (28)

$$D_{21} = \frac{c_{dyn} \cdot \eta}{2} \cdot \left\{ \sin\left[ \left( n - \frac{\kappa}{\omega} \right) \cdot \varphi + \Phi - (\Theta - \varepsilon) \right] + \sin\left[ \left( n + \frac{\kappa}{\omega} \right) \cdot \varphi + \Phi + (\Theta - \varepsilon) \right] \right\} \tag{30}$$

und erkennt aus dieser Form der Differenz der beiden Sensorsignale, daß sie aus zwei Sinussignalen mit gleich großer Amplitude aber verschiedener Frequenz zusammengesetzt ist, also einer Schwebung entspricht. Die unbekannten Parameter in der Beziehung (30) und natürlich auch in (28) sind die Größen $c_{dyn} \cdot \kappa$, $\omega$, $\Theta$, n und $\Phi$. Die Hilfsgrößen $\varepsilon$ und $\eta$ hingegen lassen sich auf $\chi$, $\omega$ und den bekannten Winkelabstand $\alpha$ zwischen dem ersten und zweiten Sensor zurückführen. Es gilt

$$\varepsilon = \arctan\left( \frac{\sin\left( \frac{\kappa}{\omega} \cdot \alpha \right)}{1 - \cos\left( \frac{\kappa}{\omega} \cdot \alpha \right)} \right) \tag{31a}$$

und

$$\eta = \frac{1}{\sqrt{2 \cdot \left[ 1 - \cos\left( \frac{\kappa}{\omega} \cdot \alpha \right) \right]}} \tag{31b}$$

Für (31a) und (31b) läßt sich auch ein unmittelbarer funktionaler Zusammenhang durch Eliminieren des Parameters $\frac{\kappa}{\omega} \cdot \alpha$ finden. Auf diesen wird später zurückgegriffen.

$$\eta = \frac{1}{2 \cdot \cos(\varepsilon)} \tag{31c}$$

$$\varepsilon = \arccos\left( \frac{1}{2 \cdot \eta} \right) \tag{31d}$$

Die besondere Form des durch die Gleichung (30) beschriebenen Differenzsignals läßt es zweckmäßig erscheinen, diese Gleichung in einer Form anzuschreiben, die einfachen Vergleich mit einer Fourier-Reihe erlaubt.
Zu diesem Zweck bildet man

$$D_{21} = \frac{c_{dyn} \cdot \eta}{2} \cdot \left\{ \sin\left[\left(n - \frac{\kappa}{\omega}\right) \cdot \varphi\right] \cdot \cos\left[\Phi - (\Theta - \varepsilon)\right] + \cos\left[\left(n - \frac{\kappa}{\omega}\right) \cdot \varphi\right] \cdot \sin\left[\Phi - (\Theta - \varepsilon)\right] \right\} +$$

$$+ \frac{c_{dyn} \cdot \eta}{2} \cdot \left\{ \sin\left[\left(n + \frac{\kappa}{\omega}\right) \cdot \varphi\right] \cdot \cos\left[\Phi + (\Theta - \varepsilon)\right] + \cos\left[\left(n + \frac{\kappa}{\omega}\right) \cdot \varphi\right] \cdot \sin\left[\Phi + (\Theta - \varepsilon)\right] \right\}$$

$$(32)$$

setzt hierin

$$a_{nied} = \frac{c_{dyn} \cdot \eta}{2} \cdot \sin\left[\Phi - (\Theta - \varepsilon)\right] \qquad b_{nied} = \frac{c_{dyn} \cdot \eta}{2} \cdot \cos\left[\Phi - (\Theta - \varepsilon)\right]$$

$$a_{hoch} = \frac{c_{dyn} \cdot \eta}{2} \cdot \sin\left[\Phi + (\Theta - \varepsilon)\right] \qquad b_{hoch} = \frac{c_{dyn} \cdot \eta}{2} \cdot \cos\left[\Phi + (\Theta - \varepsilon)\right]$$

$$(33)$$

und erhält

$$D_{21} = a_{nied} \cdot \cos\left[\left(n - \frac{\kappa}{\omega}\right) \cdot \varphi\right] + b_{nied} \cdot \sin\left[\left(n - \frac{\kappa}{\omega}\right) \cdot \varphi\right]$$
$$+ a_{hoch} \cdot \cos\left[\left(n + \frac{\kappa}{\omega}\right) \cdot \varphi\right] + b_{hoch} \cdot \sin\left[\left(n + \frac{\kappa}{\omega}\right) \cdot \varphi\right]$$

$$(34)$$

in der gewünschten Fourier-Form. Man sieht, daß von dieser Reihe nur zwei Glieder aufscheinen. Das erste dieser Glieder ist jenes der Ordnung n - $\kappa/\omega$. Dieses kann von nullter Ordnung sein, wenn n - $\kappa/\omega$ = 0 wird. Der Quotient $\kappa/\omega$ wird aus $\kappa$ der Kreisfrequenz der Membranschwingung und aus der Winkelgeschwindigkeit $\omega$ der Schablone gebildet. Da die Schwingung durch die Drehbewegung der Schablone angeregt wird, können nur ganzzahlige Verhältnisse $\kappa/\omega$ auftreten und die Ordnungen n - $\kappa/\omega$ und n + $\kappa/\omega$ bleiben dann ebenfalls ganzzahlig.

Würde man die Werte der Koeffizienten $a_{nied}$, $b_{nied}$, $a_{hoch}$ und $b_{hoch}$ und die Parametern, $\kappa$ und $\omega$ in der Beziehung (32) kennen, so könnte man für jeden beliebigen Winkel $\varphi$ den Wert des Differenzsignals $D_{21}$ ermitteln. Nun kennt man Koeffizienten und Parameter leider nicht, wohl aber verfügt man über die für jeweils eine Umdrehung abgespeicherten Wert $D_{21}$ = $\Delta s_{sens, 1}$ - $\Delta s_{sens, 2}$. Aus diesen lassen sich die Koeffizienten $a_{nied}$, ..., $b_{hoch}$ z. B. mit der bekannten Methode der schnellen Fouriertransformation (FFT) rückrechnen. Sind die Koeffizienten ermittelt, dann stehen die vier Gleichung (31) zur Verfügung, um weitere Unbekannte der sechs Parameter $c_{dyn}$, $\varepsilon$, $\eta$, $\Phi$, n und $\Theta$ zu berechnen. Außer den genannten Koeffizienten fallen bei der FFT auch noch die Ordnungen dieser Koeffizienten an, also

$$O1 = n - \kappa/\omega \qquad (34a)$$

$$O2 = n + \kappa/\omega \qquad (34b)$$

weil die Koeffizienten aller anderen Ordnungen gleich Null sind.

Sehr einfach läßt sich der Wert von $\Phi$ ermitteln:

$$a_{med} = \frac{c_{dyn} \cdot \eta}{2} \cdot \left[\sin(\Phi) . \cos(\Theta - \varepsilon) - \sin(\Theta - \varepsilon) . \cos(\Phi)\right]$$

$$a_{hoch} = \frac{c_{dyn} \cdot \eta}{2} \cdot \left[\sin(\Phi) . \cos(\Theta - \varepsilon) + \sin(\Theta - \varepsilon) . \cos(\Phi)\right]$$

Durch Summenbildung der beiden letzten Ausdrücke erhält man

$$a_{nied} + a_{hoch} = c_{dyn} . \eta . \sin(\Phi) . \cos(\Theta - \varepsilon); \qquad (35)$$

völlig ähnlich folgt:

$$b_{nied} + b_{hoch} = c_{dyn} . \eta . \cos(\Phi) . \cos(\Theta - \varepsilon) \qquad (36)$$

und aus (33) und (34) schließlich

$$\Phi = \arctan\left(\frac{a_{med} + a_{hoch}}{b_{med} + b_{hoch}}\right) \qquad (37)$$

Ferner läßt sich zeigen, daß für die Differenz $\Theta - \varepsilon$ gilt:

$$\Theta - \varepsilon = \frac{1}{2} \cdot \left[\arctan\left(\frac{a_{hoch}}{b_{hoch}}\right) - \arctan\left(\frac{a_{med}}{b_{med}}\right)\right] \qquad (38)$$

Aus den Gleichungen (29a und (29b) kann man den Wert $\alpha . \kappa / \omega$ eliminieren und man erhält für $\varepsilon$ als Funktion von $\eta$:

$$\varepsilon = \arccos\left(\frac{1}{2 . \eta}\right) \qquad (39)$$

Letztlich kann man mit Hilfe von (32) zeigen, daß gelten muß

$$\frac{c_{dyn}^2 \cdot \eta^2}{4} = a_{med}^2 + b_{med}^2 = a_{hoch}^2 + b_{hoch}^2 \qquad (40)$$

Die Ausdrücke (38), (39) und (40) stellen 3 Gleichungen für die Ermittlung der 4 Unbekannten $\Theta$, $\varepsilon$, $\eta$ und $c_{dyn}$ dar. Das Gleichungssystem ist daher nicht ausreichend bestimmt und eine Lösung ist noch nicht möglich. Dies hätte schon aus (34) erkannt werden können, denn schon dieses Gleichungssystem war unterbestimmt und darüber hinaus kamen die Größen $\Phi$ und $\varepsilon$ und ebenso die Größen $c_{dyn}$ und $\eta$ in (34) stets in der gleichen Kombination vor. Für eine Lösung der vorliegenden Aufgabe ist es daher notwendig, einen dritten Abstandssensor zu montieren, der zu dem ersten Abstandssensor um den Einbauwinkel $\beta$ versetzt ist, wobei $\beta \neq \alpha$ sein soll. Erst mit den von diesem dritten Sensor zusätzlich gelieferten Meßwerten wird es möglich sein, alle für die Bestimmung der Schablonenschwingung notwendigen Größen zu ermitteln und auf diese Weise die Rundheitsabweichungen zufolge der Schwingung von den statischen Rundheitabweichungen zu trennen. Dies ist notwendig, weil die Berechnung der radialen und tangentiellen Lagefehler am Ort des Flüssigkeitsauftrags für die statische Abweichung und die Schwingungsabweichung nur getrennt erfolgen kann.

Zunächst ist aber noch eine Umformung der Beziehung (40) notwendig. Aus (40) folgt, wenn man $\eta$ durch (31b)

ersetzt und berücksichtigt, daß $1 - \cos(\chi) = 2.\sin^2(\chi/2)$ ist

$$a_{med}^2 + b_{med}^2 = a_{hoch}^2 + b_{hoch}^2 = \frac{c_{dyn}^2 \cdot \eta^2}{4} = \frac{c_{dyn}^2}{4} \cdot \frac{1}{2.\left[1 - \cos\left(\dfrac{\kappa}{\omega}.\alpha\right)\right]} = \frac{c_{dyn}^2}{16.\sin^2\left(\dfrac{1}{2}.\dfrac{\kappa}{\omega}.\alpha\right)}$$

$$(41)$$

Ganz ähnlich wie bisher für das Differenzsignal für den zweiten und ersten Sensor nachgewiesen wurde, erhält man für das Differenzsignal zwischen dem dritten und ersten Sensor anstelle von (34)

$$D_{31} = \Delta s_{sens,1}(t) - \Delta s_{sens,3}(t + \Delta \bar{t}) =$$
$$= \bar{a}_{med} \cdot \cos\left[\left(n - \frac{\kappa}{\omega}\right).\varphi\right] + \bar{b}_{med} \cdot \sin\left[\left(n - \frac{\kappa}{\omega}\right).\varphi\right] +$$
$$+ \bar{a}_{hoch} \cdot \cos\left[\left(n + \frac{\kappa}{\omega}\right).\varphi\right] + \bar{b}_{hoch} \cdot \sin\left[\left(n + \frac{\kappa}{\omega}\right).\varphi\right]$$

$$(42)$$

Die Werte $\bar{a}_{nied}$, $\bar{b}_{nied}$, $\bar{a}_{hoch}$ und $\bar{b}_{hoch}$ werden, ähnlich wie schon früher für die Koeffizienten $a_{nied}$, $b_{nied}$, $a_{hoch}$ und $b_{hoch}$, mit Hilfe einer FFT der durch Messung ermittelten Wertefolge für $D_{31}$ berechnet. Für diese Werte gilt analog zu (39)

$$\bar{a}_{nied}^2 + \bar{b}_{med}^2 = \bar{a}_{hoch}^2 + \bar{b}_{hoch}^2 = \frac{c_{dyn}^2 \cdot \bar{\eta}^2}{4} = \frac{c_{dyn}^2}{4} \cdot \frac{1}{2.\left[1 - \cos\left(\dfrac{\kappa}{\omega}.\beta\right)\right]} = \frac{c_{dyn}^2}{16.\sin^2\left(\dfrac{1}{2}.\dfrac{\kappa}{\omega}.\beta\right)}$$

$$(43)$$

Es darf erinnert werden, daß $c_{dyn}$ der maximale Schwingungsausschlag der Schablone in ihren Umfangsbäuchen ist. Dieser hängt daher nicht von der Position eines Sensors ab. Wählt man nun noch $\beta = 2\,\alpha$, dann folgt aus (41) und (43):

$$\frac{\sin^2\left(\dfrac{1}{2}.\dfrac{\kappa}{\omega}.2.\alpha\right)}{\sin^2\left(\dfrac{1}{2}.\dfrac{\kappa}{\omega}.\alpha\right)} = \frac{a_{med}^2 + b_{med}^2}{\bar{a}_{med}^2 + \bar{b}_{med}^2}$$

und weiter

$$\frac{\sin\left(\dfrac{1}{2}.\dfrac{\kappa}{\omega}.2.\alpha\right)}{\sin\left(\dfrac{1}{2}.\dfrac{\kappa}{\omega}.\alpha\right)} = \frac{2.\sin\left(\dfrac{1}{2}.\dfrac{\kappa}{\omega}.\alpha\right).\cos\left(\dfrac{1}{2}.\dfrac{\kappa}{\omega}.\alpha\right)}{\sin\left(\dfrac{1}{2}.\dfrac{\kappa}{\omega}.\alpha\right)} = 2.\cos\left(\dfrac{1}{2}.\dfrac{\kappa}{\omega}.\alpha\right) = \sqrt{\frac{a_{med}^2 + b_{med}^2}{\bar{a}_{med}^2 + \bar{b}_{med}^2}}$$

und letztendlich erhält man für

$$\frac{\kappa}{\omega} = 2 \cdot \arccos\left(\frac{1}{2} \cdot \sqrt{\frac{a_{med}^2 + b_{med}^2}{\overline{a}_{med}^2 + \overline{b}_{med}^2}}\right) \Big/ \alpha \tag{44}$$

Diese Beziehung ist der Schlüssel für die weiteren Auswertungen und gestattet nun endlich die Ermittlung von $\kappa/\omega$. Ist dieser Wert bekannt, dann kann mit (31a) die Größe $\varepsilon$ und mit (31b) auf den Wert von $\eta$ rückgeschlossen werden. Aus (38) folgt mit bekanntem $\varepsilon$ die Größe $\Phi$ und aus (40) mit bekanntem $\eta$ schließlich der Wert von $c_{dyn}$. Aus (34a) oder (34b) kann auch die Zahl der Schwingungsbäuche n (= Ordnung der Schwingung) bestimmt werden. Es sind jetzt alle Parameter, die im Schwingungsanteil der Beziehung (23) als unbekannt angesetzt wurden, bestimmt.

Die vom ersten Sensor während einer Umdrehung gemessen Werte $s_{sens,\,1}(\varphi)$ können daher von ihrem Schwingungsanteil (24) befreit werden. Zu achten ist hierbei auf die richtige Bestimmung von $\varphi$ und t. In der Ortsfunktion $\sin(n.\varphi + \Phi)$ des Schwingungsanteils (24) bedeutet $\varphi$ den Winkel, zwischen der Nullmarke und dem ersten Sensor zum Meßzeitpunkt t. Man erhält für den vom dynamischen Anteil befreiten Abstand der Schablonenwand zum Sensor

$$s_{sens,\,1,statisch}(\varphi) = s_{sens,\,1}(\varphi) - c_{dyn}.\sin\left(n.\varphi + \Phi\right).\cos\left(\frac{\kappa}{\omega}.\varphi + \Theta\right) =$$

$$= \underbrace{A - R_0}_{s_0} - \sum_{i=1}^{N_{um}/2}\left[a_i.\cos(i.\varphi) + b_i.\sin(i.\varphi)\right] \tag{45}$$

Für den statischen Teil der Differenz der Meßabstände vom Sensor zur idealen Schablone und vom Sensor zur realen Schablone $\Delta s_{sens,\,1,\,statisch} = s_0 - s_{sens,\,1,\,statisch}(\varphi)$ folgt somit

$$\Delta s_{sens,\,1,statisch}(\varphi) = s_0 - s_{sens,\,1}(\varphi) + c_{dyn}.\sin\left(n.\varphi + \Phi\right).\cos\left(\frac{\kappa}{\omega}.\varphi + \Theta\right) \tag{47}$$

Die weitere Rechnung wird besser überschaubar, wenn $\varphi$ in (47) durch die Zahl der Encoderimpulse ersetzt wird, die mit dem Nullimpuls beginnend gezählt werden. Es wird dann

$$\Delta s_{sens,\,1,statisch}(k) = s_0 - s_{sens,\,1}(k) + c_{dyn}.\sin\left(n.\frac{k}{N_{um}}2.\pi + \Phi\right).\cos\left(\frac{\kappa}{\omega}.\frac{k}{N_{um}}2.\pi + \Theta\right) \tag{48}$$

und dieser Wert $\Delta s_{sens,\,1,\,statisch}$ wird auf dem Speicherplatz k seiner Meßwertfolge abgelegt. Befindet sich die vom Sensor vermessene Schablonenstelle an der Gravurstelle - es sind dann weitere $N_\Gamma$ (siehe Beziehung (9)) Impulse vergangen - dann wird dieser Wert behoben, um den zum Zeitpunkt des Auftreffens des Tropfens auf der Schablonenwand geltenden Schwingungsanteil zu korrigieren, und aus diesem Wert die zu berücksichtigende Radialverlagerung der Schablone zu ermitteln. Dieser Sachverhalt wird mit der schon früher benutzten Symbolik wie folgt beschrieben:

$$\Delta s_{grav} \langle k + N_\Gamma \rangle =$$

$$\Delta s_{Sens, 1, statisch} \langle k \rangle - c_{dyn} \cdot \sin\left(n \cdot \frac{k}{N_{um}} \cdot 2 \cdot \pi\right) \cdot \cos\left(\frac{\kappa}{\omega} \cdot \frac{k + N_{\Gamma 1}}{N_{um}} \cdot 2 \cdot \pi + \Theta\right)$$

$$(49)$$

In dieser Beziehung ist für die Impulszahl $N_{\Gamma 1}$ nicht etwa der Wert nach Beziehung (9) einzusetzen, sondern Jene Impulszahl, welche der Encoder abgibt, während eine Stelle der Schablonenwand vom Ort des Sensors bis zur Gravurstelle läuft und dies ist:

$$N_{\Gamma 1} = N_{um} \cdot \Gamma/(2 \cdot \pi) \qquad (49a)$$

Für die Berechnung der Verlagerung der Schablonenwand in Umfangsrichtung muß ein Ausgangspunkt gewält werden, an welchem sich die Wand in Umfangsrichtung nicht verlagert. Es ist daher zu klären, ob es auf der Schablone eine Mantelerzeugende gibt, welche an keiner Stelle eine Verlagerung in Umfangsrichtung erfährt. In Abbildung 5 ist eine im Ruhezustand kreiszylindrische Schablone gezeigt, welche in Form eines Ovals schwingt. Bei dünnen Schablonen oder dünnen Hohlzylindern sind bei kleinen Schwingungsausschlägen an allen Umfangsstellen die positiven und negativen Maximalauslenkungen gleich groß.

Es sollen zunächst nur Schwingungsauslenkungen betrachtet werden, welche in Richtungen normal zum Querschnittskreis der Schablone (im Ruhezustand) zu beobachten sind. Bei einem entsprechenden Versuch erkennt man dann Stellen, an welchen die Schablone scheinbar maximale Auslenkungen erfährt, und auch Stellen, an welchen scheinbar keine Auslenkungen zu sehen sind. Die zuerst genannten Stellen sollen als Schwingungsbäuche bezeichnet werden und die zuletzt genannten als Schwingungsknoten, obwohl diese Bezeichnungsweise dann nicht richtig ist, wenn man auch die Schwingungsausschläge in Umfangsrichtung betrachtet. Letztere sind aber bei visueller Betrachtung nur schwer erkennbar. Aus einer rechnerischen Abschätzung der Bogenlängen zwischen den so definierten "Knoten" folgt nämlich, daß

-   erstens die Umfangsstelle, die bisher als Schwingungsknoten angesehen wurde, verglichen mit den anderen Punkten der Schablonenoberfläche eine maximale Auslenkung in Umfangsrichtung erfährt;
-   zweitens diese Auslenkungen dem Betrag nach halb so groß sind, wie die Auslenkungen der Schablonenwand in Richtung der Normalen an den "Schwingungsbäuchen":
-   und drittens an den Schwingungsbäuchen aus Symmetriegründen die Auslenkungen in Umfngsrichtung verschwinden müssen.

Eine Mantelerzeugende des Schablonenmantels, welche durch einen Schwingungsbauch verläuft, erfährt also keine Auslenkung in Umfnagsrichtung und eignet sich daher ganz besonders als Ursprung für die Berechnung der geometrischen Verlagerung der Schablonenwand in Umfangsrichtung bei schwingenden Schablonen.

Kennzeichnend für die hier definierten Schwingungsbäuche, bei welchen die Normalauslenkungen Maximalwerte erreichen, ist, daß die Ortsfunktion

$$\sin(2 \cdot n \cdot k_B \cdot \pi/Num + \Phi)$$

in (23) den Wert 1 annimmt. Hieraus folgt

$$n \cdot \frac{k_B}{N_{um}} 2 \cdot \pi + \Phi = \frac{\pi}{2}$$

$$(50)$$

und damit wird die der Bauchlage entsprechende Impulszahl $k_B$ (= Impulszahl von der Nullmarke bis zur ersten Bauchlage)

$$k_B = \left( \frac{\pi}{2} - \Phi \right) \frac{N_{um}}{2.n.\pi}$$

(51)

Der nächste Berechnungsschritt besteht darin, die Umfangsteillängen db(k) der Schablone zwischen jeweils zwei Meßpunkten zu ermitteln und diese von der Lage des Schwingungsbauchs ausgehend bis zur Gravurstelle zu summieren, um die Bogenlänge dieses Teilumfangs der Schablone zu erhalten. Mit dem Teilumfang muß dann die Differenz zum entsprechenden Tellumfang der idealen Schablone gebildet werden, und diese ist die Verlagerung der Schablonenwand in Umfangsrichtung. Die Teillängen db(k) sind, wie schon früher, aus radialen und tangentiellen Teilstücken geometrisch zusammenzusetzen. Die radialen Teilstücke bestehen hier aus einem statischen und einem dynamischen Fehleranteil. Man erhält für den statischen Fehleranteil des radialen Teilstücks (Figur 6)

$$db_{rad,stat}(k) = \Delta s_{sens,1,statisch}(k) - \Delta s_{sens,1,statisch}(k+1)$$

(52)

Der dynamische Fehleranteil ist auf die Schwingung zurückzuführen, wobei in die Zeitfunktion ZTF aller Teilstücke für t die Gravurzeit $t_G$ einzusetzen ist. Wie schon früher gezeigt wurde, kann die Gravurzeit $t_G$ durch die Zahl der Encoderimpulse ersetzt werden. Hierbei ist jene Zahl einzusetzen, welche dem Zeitintervall zwischen Messung und Gravur entspricht, diese ist durch (49a) gegeben.

$$ZTF = \cos(\kappa.t_G + \Theta) = \cos\left( \frac{\kappa}{\omega} . \frac{k + N_r}{N_{um}} . 2.\pi + \Theta \right)$$

(53)

$$db_{rad,dyn}(k) = c_{dyn} . \left[ \sin\left( n.\frac{k}{N_{um}} . 2.\pi + \Phi \right) - \sin\left( n.\frac{k+1}{N_{um}} . 2.\pi + \Phi \right) \right] . ZTF$$

$$\cong -c_{dyn} . n . \frac{2.\pi}{N_{um}} . \cos\left( n.\frac{k}{N_{um}} . 2.\pi + \Phi \right) . ZTF$$

(54)

Für das tangentielle Teilstück erhält man

$$db_{tan}(k) = \left( R_0 + \frac{\Delta s_{sens,1,statisch}(k) + \Delta s_{sens,1,statisch}(k+1)}{2} \right) . \frac{2.\pi}{N_{um}}$$

(55)

Die geometrisch zusammengefügte Teillänge wird

$$db(k) = \sqrt{\left[ db_{tan}(k) \right]^2 + \left[ db_{rad,stat}(k) + db_{rad,dyn}(k) \right]^2}$$

(56)

Die Summierung dieser Teillängen wird am besten zunächst für einen vollen Umfang ausgeführt, um einen schon früher gebrauchten Korrekturfaktor $K_{korr}$ ermitteln zu können. Dieser soll auch hier Wirkungen wie die der Sensorverlagerung oder den Polygonaleffekt ausgleichen.
Es wird

$$K_{korr} = \frac{\displaystyle\sum_{k=k_B}^{N_{um}+k_B} db(k)}{2.\pi.R_0}$$

(57)

Es folgt nun weiter für die Bogenlängen des Teilumfangs der realen Schablone

$$Umf_{ist}(k) = \sum_{i=k_B}^{i=k_B+k} db(i)$$

(58)

und für die Bogenlänge des Teilumfangs der idealen Schablone

$$Umf_{soll}(k) = 2 \cdot \pi \cdot \frac{k - k_n}{N_{um}} \cdot R_0$$

(59)

Hieraus kann endlich die Umfangsfehllage erster Art des Musterbilds an der Stelle des Schablonenumfangs gebildet werden, welche der Speicheradresse k zugeordnet ist. Diese Umfangsfehllage gilt aber zur Zeit der Abgabe des (k + $N_{\Gamma 1}$)-ten Impulses.

$$\Delta U1 = Umf_{soll}(k) - Umf_{ist}(k) \tag{60}$$

Wie schon bei Erläuterung der Beziehung (18) gezeigt wurde, kann mit diesem Wert für $\Delta U1$ der für den Ausgleich der Umfangsfehllage erster Art des Musterbilds notwendige Adressenkorrekturanteil gebildet werden.

$$\Delta z1\langle k + N_{\Gamma 1}\rangle = \frac{N_{um}}{2 \cdot \pi \cdot R_0} \cdot \Delta U1$$

(61)

Für den Ausgleich der Umfangsfehllage zweiter Art des Musterbilds muß die radiale Abstandsfehllage bekannt sein. Diese setzt sich hier aus der statischen Fehllage $\Delta s_{Sens,1,statisch}$ entsprechend der Beziehung (48) und einem dynamischen Anteil nach der Beziehung (53) und (54) zusammen. Eine theoretisch exakte Berechnung des Orts und Zeitpunkts des Auftreffens eines Tropfens auf der Schablonenoberfläche ist nicht möglich. Da jedoch die Schwingungsfrequenz sehr wahrscheinlich der Frequenz der Störkraft entspricht, und dieses ist die Drehzahl, werden volle Schwingungsperioden während einer vollen Umdrehung durchlaufen. Verglichen mit dem Schablonenumfang ist die mögliche Abweichung der Lage des Auftrefforts des Tropfens auf der realen Schablone gegenüber jenem auf der idealen Schablone sehr viel kleiner. Dies gilt auch dann, wenn die Schwingungsfrequenz dem zwei-, drei- oder vierfachen der Drehzahl entsprechen sollte. Die Schwierigkeit der Abschätzung der dynamischen Verlagerung der Schablonenwand infolge der Schwingung kann allerdings vermieden werden, wenn die Radiallage der Schablone unmittelbar am Ort des Flüssigkeitsauftrags gemessen wird, etwa dadurch, daß man einen Abstandssensor unmittelbar am Düsenaustritt vorsieht, etwa eine Induktionsspule, die den Düsenaustritt umgibt. Gleiches gilt dann auch für die mögliche Zeitdifferenz des Auftreffens des Tropfens auf realer und idealer Schablone im Vergleich mit der Schwingungsperiode. Daher ist auch die mögliche Lageänderung, welche die Schablonenwand zufolge der Schwingung innerhalb dieser kleinen Zeitdifferenz erfahren kann, so klein, daß mit ausreichender Näherung der Wert $db_{rad,dyn}(k)$ nach (54) für die zusätzliche, dynamische, radiale Schwingungsauslenkung gesetzt werden kann. Die durch die Schwingung bedingte zusätzliche Auslenkung kann also für die Ermittlung der Adressenkorrektur als konstanter Wert betrachtet werden, welcher additiv zur radialen Fehllage $\Delta s_{Sens,1,statisch}$ hinzutritt. Der Adressenkorrekturanteil für die Umfangsfehllage zweiter Art des Musterbilds kann dann ebenso ermittelt werden, wie dies für die nicht schwingende, ruhiggestelte Schablonenwand bei

22

der Ermittlung der Beziehungen (19) und (20) abgeleitet wurde:

$$\Delta z_{2,1}(k) = -\left(\Delta s_{Sens,1,stat}(k) + db_{rad,dyn}(k)\right) \cdot \frac{w}{u} \cdot \frac{N_{um}}{2 \cdot \pi \cdot R_0}$$

$$(62)$$

$$\Delta z_2\langle k + N_\Gamma \rangle = -\frac{\left(\Delta s_{Sens,1,statisch}(k) + db_{rad,dyn}(k)\right)^2}{2 \cdot \Delta s_{Sens,1,stat}(k) - \Delta s_{Sens,1,stat}\left(k - \Delta z_{2,1}(k)\right) + db_{rad,dyn}(k)} \cdot \frac{w}{u} \cdot \frac{N}{2 \cdot \pi \cdot R_0}$$

$$(63)$$

Eine weitere Steigerung der Genauigkeit der angegebenen Adressenkorrekturen kann erzielt werden, wenn man in (53) anstelle des nach (49a) errechneten Werts $N_{\Gamma 1}$ einen Wert $N_{\Gamma 2}$ für die Impulszahl bis zum wahrscheinlichen Auftreffzeitpunkt des Tropfens auf der Schablonenwand einsetzt, der sich aus dem Wert $N_\Gamma$ und der durch den Abstandsfehler $D_{Sens,1,statisch}(k) + db_{rad,dyn}(k)$ verkürzten Laufzeit des Tropfens von der Düse bis zu Schablonenwand ergibt. Wie schon bei der Herleitung der Beziehung (9) ausgeführt wurde, entspricht $N_\Gamma$ der Zahl der Impulse, die zwischen dem Erscheinen einer Schablonenstelle beim Sensor und dem Zeitpunkt des Ausstoßens des dieser Schablonenstelle zugeordneten Tropfens aus der Düse vom Encoder abgegeben wurden. Zwischen der Düse und der Schablone liegt die vom Tropfen zu durchlaufende Distanz $L_T$. Diese Distanz wird aber durch den zuvor angegebenen Abstandsfehler verkürzt (positive Abstandsfelder entsprechen einer Vergrößerung von $R_0$). Die Laufzeit des Tropfens von der Düse zur Schablonenoberfläche entspricht dann

$$t_{Tropf} = \frac{L_T - \Delta_{Sens,1,statisch}(k) - db_{rad,dy,}(k)}{w}$$

$$(64)$$

Die Zahl der während dieser Zeit abgegebenen Impulse ist

$$N_T = t_{Tropf} \cdot \frac{\omega}{2 \cdot \pi} \cdot N_{Um}$$

$$(65)$$

und daher folgt für den besseren Wert

$$N_{\Gamma 2} = N_\Gamma + N_T = N_\Gamma + \frac{L_T - \Delta_{Sens,1,statisch}(k) - db_{rad,dyn}(k)}{w} \cdot \frac{\omega}{2 \cdot \pi} \cdot N_{Um}$$

$$(66)$$

Der Rechenaufwand für die Ermittlung der Korrekturen $\Delta z1$ und $\Delta z2$ erscheint zunächst komplex. Diese Komplexität der Rechnung tritt aber nur bei Erstellung des Programms in Erscheinung. Wesentlich wichtiger ist es, den laufend notwendigen Rechenaufwand zu berücksichtigen und abzuwägen, ob dieser Aufwand bei einer gegebenen Rechnerleistung vertretbar ist bzw. welche Kosten verusacht werden, wenn die Rechnerleistung dem erforderlichen Aufwand angepaßt wird. Hier ist in Betracht zu ziehen, daß über Abschnitte der Schablone, die etwa 10 mm lang sind, nur sehr geringfügige Unterschiede in der Größe der Schwingungsamplitude auftreten und daß innerhalb dieser Abschnitte einmal berechnete Korrekturwerte für alle hier vorhandenen Musterreihen gelten. Die Schwingungsform, d. h. die Ordnung der Schwingung bleibt über die ganze Länge der Schablone erhalten und ändert sich nur, wenn die Erregerfrequenz wechselt. Bedenkt man, daß die Breite einer Gravurlinie höchstens 100 µm beträgt, dann heißt dies, daß der beschriebene Rechnungsgang nur einmal für etwa 100 Umdrehungen der Schablone ausgeführt werden muß und dieser Aufwand erscheint vertretbar.

Eine erfindungsgemäße Vorrichtung zur Durchführung des vorstehend beschriebenen Verfahrens ist in Figur 7 gezeigt. In Figur 7 bezeichnet das Bezugszeichen 1 einen dünnen Siebhohlzylinder, auf welchem durch Düsen 2 ein Musterbild aufzutragen ist. Es kann sich hier um eine oder mehrere parallel zueinander liegende Düsen handeln, die in Zylinderlängsrichtung nebeneinanderliegend angeordnet sind. Der Siebhohlzylinder 1 ist durch zwei in dessen Stirnseiten eingreifende Stützkegel 3 und 4 drehbar gelagert, wobei diese Stützkegel 3 und 4 den Siebhohlzylinder 1 zentrieren. Letzterer ist mit den Stützkegeln 3 und 4 durch Reibschluß drehfest verbunden, kann sich aber mit diesen gemeinsam drehen. Der antriebsseitig befindliche Stützkegel 4 wird durch einen nicht mehr dargestellten Drehantrieb innerhalb eines Spindelkastens 5 in Drehung versetzt. Der reitstockseitig befindliche Stützkegel 3 wird auf Führungen 6 gemeinsam mit einem Reitstock 7 so weit an das linke Ende des Siebhohlzylinders 1 herangefahren, daß dieser Stützkegel 3 in den Siebhohlzylinder 1 eingreift und diesen gegen den Stützkegel 4 preßt. Auf diese Weise wird der Siebhohlzylinder 1 zentriert und mit den Stützkegeln 3, 4 durch Reibschluß gekuppelt. Die Drehbewegung des Stützkegels 4 wird dadurch auf den Siebhohlzylinder 1 und den Stützkegel 3 übertragen. Der Stützkegel 3 ist im Reitstock 7 zwar drehbar gelagert, wird aber nur in Sonderfällen, dann jedoch synchron zum Stützkegel 4 angetrieben.

Auf einem parallel zur Drehachse 8 des Siebhohlzylinders 1 auf Führungen 9 bewegten Schlitten 10 sind die Düsen 2 montiert, welche zur Ausstoßung z. B. einer polymerisierbaren oder einer strahlungsabsorbierenden Flüssigkeit dienen. Der Schlitten 10 wird durch eine Spindel 11 in Längsrichtung des Siebhohlzylinders 1 bewegt. Die Führungen 9 und die Spindel 11 sind an einem Maschinenbett 12 befestigt, auf dem auch der Spindelkasten 5 und der Reitstock 7 sitzen. Die Spindel 11 wird durch einen Schrittmotor 13 in Drehung versetzt. Die Düsen 2 stoßen entsprechend den Erfordernissen des auf dem Siebhohlzylinder 1 aufzutragenden Musters bzw. Musterbilds Flüssigkeit aus. Hierzu wird das Musterbild, welches in geeigneter Form in einem elektronischen Speicher gespeichert ist, durch einen Rechner 14 aus dem in ihm vorhandenen Speicher abgerufen. Dieses Abrufen der Musterdaten bzw. der Musterbildinformation durch den Rechner 14 erfolgt entsprechend der Momentanposition der Auftreffstellen der Flüssigkeitropfen aus den Düsen 2 auf dem Siebhohlzylinder 1. Der Rechner 14 gibt den Befehl zum Ausstoßen oder Nichtausstoßen eines Flüsigikeitstropfens an die Düsen 2 über eine Steuerleitung 18 an diese weiter. Die Düsen 2 erfordern zu ihrer Betätigung Leistungssignale, und zu diesem Zweck sind entweder entsprechende Leistungsverstärker noch am Ausgang des Rechners 14 vorgesehen oder Verstärker im Zuge der Steuerleitung 18 angeordnet, z. B. unmittelbar vor den Düsen 2. Diese Leistungsverstärker sind der Übersicht wegen in der Zeichnung nicht dargestellt. Die Momentanposition einer Auftreffstelle der Flüssigkeitropfen ermittelt der Rechner 14 einmal aus der Umfangslage des Siebhohlzylinders 1, die ihm über einen Encoder 15 und eine mit diesem verbundene Signalleitung 16 übermittelt wird, und zum zweiten aus der Längsposition des Schlittens 10, die dem Rechner 14 bekannt ist, weil dieser die Signale für den Schrittmotor 13 über eine Ansteuerleitung 17 zu diesem Motor 13 ausgibt.

Mit dem Schlitten 10 ist ein Bügel 19 verbunden, der unterhalb des Siebhohlzylinders 1 zu liegen kommt und diesen im Abstand z. B. teil- bzw. halbkreisförmig umgibt. Der Bügel 19 wird somit bei Bewegung des Schlittens 10 in Richtung der Zylinderachse 8 entsprechend mitbewegt. Am Bügel 19 befestigt bzw. in diesen eingelassen sind ein oder mehrere Abstandssensoren 20, die radial zum Siebhohlzylinder 1 ausgerichtet den Abstand zwischen ihnen und der Oberfläche bzw. Mantelfläche des Siebhohlzylinders 1 messen. Die Abstandsmeßsignale gelangen über eine Leitung 21 zum Rechner 14. Der Bügel 19 kann z. B. drei Abstandssensoren 20 tragen, die an verschiedenen Umfangspositionen des Siebhohlzylinders 1 liegen. Durch diese Abstandssensoren 20 werden an jeweils festen Meßpositionen radiale Abstände zwischen ihnen und der tatsächlichen Lage der Wand des Siebhohlzylinders 1 für eine Vielzahl von Umfangspositionen des Siebhohlzylinders 1 gemessen, wenn sich dieser dreht. Die Jeweiligen Meßsignale werden dann im Rechner 14 verarbeitet, um aus den gemessenen Abständen zwischen Sensor und Hohlzylinderoberfläche die radialen und tangentialen Lageabweichungen zu ermitteln.

Es ist noch eine Gäsfordereinrichtung 22 vorgesehen, die über einen Strömungskanal 23 mit einem Kanal in Verbindung steht, der im Innern von Reitstock 7 und Stützkegel 3 verläuft und eine Strömungsverbindung ins Innere des Siebhohlzylinders 1 herstellt. Durch die Gasfordereinrichtung 22 läßt sich ein Druckgas über den Strömungskanal 23 ins Innere des Siebhohlzylinders 1 leiten, um in ihm einen Überdruck aufzubauen.

Die Figur 8 zeigt einen Querschnitt durch den Siebhohlzylinder 1, der gegenüber der Drehachse 8 der Einrichtung nach Figur 7 exzentrisch gelagert ist. Die gestrichelte Linie gibt die tatsächliche Lage des Siebhohlzylinders 1 an, während die durchgezogene Linie seine eigentliche Sollage markiert. Die Abweichungen der realen Querschnittslage 22 bzw. Istlage des Siebhohlzylinders 1 gegenüber seiner Sollage 23 sind sehr stark übertrieben. Diese Abweichungen werden durch den Sensor 20 erfaßt, welcher die entstehenden Lageabweichungen in an sich bekannter Weise entweder induktiv, kapazitiv oder optisch mißt. Ein aus der Düse 2 ausgestoßener Tropfen 24 fliegt mit der Geschwindigkeit v auf den Siebhohlzylinder 1 zu und trifft schließlich auf die Mantelfläche des Siebhohlzylinders 1 auf. Zeigt der Siebhohlzylinder 1 eine positive radiale Abweichung, verschiebt er sich also in Richtung zur Düse 2, dann wird der Luftweg für den Flüssigkeitstropfen 24 verkürzt und dieser trift eigentlich zu früh auf die Mantelfläche des Siebhohlzylinders 1 auf. Umgekehrte Verhältnisse liegen vor, wenn sich die Mantelfläche des Siebhohlzylinders 1 von der Düse 2 entfernt. Wie bereits eingangs erwähnt, wird diese Radialverschiebung, aber auch eine zugeordnete Tangentialverschiebung der für den Druckvorgesehenen Positionen durch entsprechende Ansteuerung früherer oder späterer Adressen der in Umfangsrichtung des Siebhohlzylinders 1 im elektronischen Speicher abgelegten Musterdaten kompensiert. Ein dem Sensor 20 ähnlicher Sensor könnte auch auf der Düse 2 und dem Siebhohlzylinder 1 gegenüberliegend angordnet sein, um die radiale Istlage des Siebhohlzylinders 1 zu messen. Z. B. könnte der Sensor eine Induktionsspule sein, die den Düsenaustritt konzentrisch umgibt. Eine derartige Spule ist durch das Bezugszeichen 20' angedeutet.

Die Figur 9 zeigt ein Blockschaltbild der erfindungsgemäßen Vorrrichtung, mit deren Hilfe das Verfahren nach der Erfindung umgesetzt wird. Der im Querschnitt gezeigte Schablonenzylinder 1 ist von drei Sensoren 20, 20a und 20b umgeben. Diese Anzahl von Sensoren ist allerdings nur notwendig, wenn es sich um eine nicht ruhiggestellte, also um eine schwingende Schablone handelt. Ansonsten genügt ein Sensor. Der Schablonenzylinder 1 ist über eine Welle 25 drehsteif mit einem Impulsgeber 26 verbunden. Der Impulsgeber 26 sendet über eine Datenleitung 27 seine Impulssignale an eine Phasenregelschleife PLL 28, welche die Impulse elektronisch vervielfacht (z. B. Faktor 10). Mit den so vervielfachten Impulsen wird ein Zähler 29 hochgezählt, bis ein ebenfalls vom Impulsgeber 26 emittiertes Nullsignal den Zähler 29 wieder auf Null setzt. Dieses Nullsignal wird beispielsweise dann abgegeben, wenn eine Nullmarke innerhalb des Impulsgebers an einer entsprechenden Abtaststelle vorüberläuft. Diese Nullmarke ist dann auch identisch mit der schon früher erwähnten Nullmarke NM des Schablonenzylinders 1, welche auf diesem gar nicht wirklich vorhanden sein muß, die aber etwa zu Beginn der Gravurarbeit durch die Düse (n) und dann lagegleich mit der Nullmarke des Impulsgebers 26 auf den Schablonenzylinder 1 aufgespritzt werden kann. Die Baugruppe, die aus Impulsgeber 26, PLL 28 und Zähler 29 besteht, wird als Encoder 15 angesprochen. Letzterer kann natürlich auch durch einen inkrementalen Encoder ersetzt werden, wenn dieser nur über eine hinreichend hohe Auflösung verfügt.

Die Sensoren 20, 20a, 20b liefern laufend Abstandsmeßwerte als analoge Signale über Meßleitungen 21, 21a, 21b an A/D-Wandler 30, 30a, 30b, welche diese in digitale Werte umsetzen. Eine zentrale Prozessoreinheit CPU 31 erhält über einen Datenbus die gebildeten digitalen Abstandswerte von den A/D-Wandlern 30, 30a und 30b und verarbeitet diese auf eine Weise, die früher bei der Diskussion der verfahrenstechnischen Zusammehänge beschrieben wurde. Um die digitalen Abstandsmeßwerte der richtigen Umfangsstelle des Schablonenzylinders 1 zuordnen zu können, muß die CPU 31 unmittelbar vor Lesen der Abstandsmeßwerte die im Zähler 29 gespeicherte momentane Umfangsposition auslesen. Zu diesem Zweck ist auch der Zähler 29 an den Datenbus der CPU 31 angeschlossen. Die jeweils berechneten Abstandsdifferenzen und/oder die zu berücksichtigenden Adreßdifferenzen speichert die CPU 31 unter der Adresse in einem RAM 32 ab, welche dem Zählerstand bei Auslesen der digitalen Abstandsmeßwerte entspricht. Die CPU 31 bedient ferner über den Interfacebaustein IF 1 die Düse (n) 2 und ebenso den Schrittmotor 13 über den Interfacebaustein IF 2. Der gesamte Verkehr zwischen CPU und den genannten Baugruppen wird über den Daten- und Adreßbus 33 abgewickelt. Selbstverständlich kann wegen des sehr großen Arbeitspensums, welches die CPU 31 zwischen jeweils zwei Impulsen zu bewältigen hat, die CPU 31 durch Parallelprozessoren unterstützt werden.

Den Interfacebausteinen IF 1und IF 2 fällt anschließend die Aufgabe zu, das an ihrem jeweiligen Buseingang anstehende Datenwort in die richtigen seriellen Impulsinformationen für die jeweils angeschlossene periphere Baugruppe umzusetzen und ggf. zu verstärken.

Es sei noch darauf hingewiesen, daß der Adressenzähler zur Ansteuerung von Speicheradressen des RAM 32 Teil der CPU 31 sein kann. Er trägt das Bezugszeichen 31a. Auch die Adressen-Umschalteinrichtung, die in Abhängigkeit des Ausgangssignals des oder der Abstandssensoren 20, 20a, 20b ein Adressenumschaltsignal zur Ansteuerung des Adressenzählers 31a generiert, kann Teil der CPU 31 sein. Die Adressen-Umschalteinrichtung trägt dann das Bezugszeichen 31b.

## Patentansprüche

1. Verfahren zur Herstellung einer Druckschablone, bei dem zur Übertragung eines in einem elektronischen Speicher (32) gespeicherten Musters auf einen Schablonenzylinder (1) aus einer Düse (2) ausgespritzte Flüssigkeit (24) bei sich drehendem Schablonenzylinder (1) auf dessen Mantelfläche aufgetragen und die Düse (2) durch zum Muster gehörende Musterdaten angesteuert wird, **dadurch gekennzeichnet,** daß in Abhängigkeit wenigstens einer Abweichung zwischen Ist- und Sollage der Mantelfläche gegenüber den zur Sollage gehörenden Musterdaten in Umfangsrichtung des Schablonenzylinders (1) früher oder später liegende Musterdaten ausgelesen werden, um eine Musterverlagerung infolge der Abweichung zu vermeiden.

2. Verfahren nach Anspruch 1, **dadurch gekennzeichnet,** daß eine radiale Istlage der Mantelfläche an wenigstens einem Meßpunkt gemessen wird.

3. Verfahren nach Anspruch 2, **dadurch gekennzeichnet,** daß die Istlage der Mantelfläche am Ort des Flüssigkeitsauftrags gemessen wird.

4. Verfahren nach Anspruch 2, **dadurch gekennzeichnet,** daß die Istlage der Mantelfläche an wenigstens einem Meßpunkt außerhalb des Bereichs, in welchem ein Flüssigkeitsauftrag erfolgt, gemessen wird.

5. Verfahren nach einem der Ansprüche 1 bis 4, **dadurch gekennzeichnet,** daß aus der oder den gemessenen radialen Istlagen der Mantelfläche die Abweichung zwischen Ist- und Sollage der Mantelfläche bzw. die Musterverlagerung im Bereich des Flüssigkeitsauftrags ermittelt wird.

6. Verfahren nach Anspruch 2, **dadurch gekennzeichnet,** daß die Istlage der Mantelfläche an drei in derselben Umfangsebene voneinander beabstandeten Meßpunkten gemessen wird, um hieraus die Abweichung zwischen Ist- und Sollage der Mantelfläche bzw. die Musterverlagerung im Bereich des Flüssigkeitsauftrags zu ermitteln.

7. Verfahren nach einem der Ansprüche 1 bis 6, **dadurch gekennzeichnet,** daß die Abweichung zwischen Ist- und Sollage der Mantelfläche bzw. die Musterverlagerung im Bereich des Flüssigkeitsauftrags in Abhängigkeit der Radialabweichung und/oder der Tangentialabweichung der Mantelfläche von der jeweiligen Sollage ermittelt wird.

8. Verfahren nach einem der Ansprüche 1 bis 7, **dadurch gekennzeichnet,** daß in Abhängigkeit der ermittelten Musterverlagerung ein den elektronischen Speicher (32) adressierender Adressenzähler (31a) angesteuert wird.

9. Verfahren nach einem der Ansprüche 1 bis 8, **dadurch gekennzeichnet,** daß als Schablonenzylinder (1) ein dünnwandiger Hohlzylinder zum Einsatz kommt, in dessen Innern ein Überdruck erzeugt wird.

10. Vorrichtung zur Herstellung einer Druckschablone, mit einer Lagereinrichtung (3, 4) zur drehbaren Lagerung eines Schablonenzylinders (1), einem elektronischen Speicher (32) zur Speicherung eines Musters, wenigstens einer Düse (2) zum Ausspritzen von Flüssigkeit (34), um das Muster auf die Mantelfläche des Schablonenzylinders (1) zu übertragen, und einer Steuereinrichtung (31), die das Muster bei sich drehendem Schablonenzylinder (1) ausliest und entsprechend den ausgelesenen Musterdaten die Düse (2) ansteuert, **gekennzeichnet durch** eine Adressen-Umschalteinrichtung (31b) zur Umschaltung des Zählwerts eines Adressenzählers (31a) für den elektronischen Speicher (32) in Abhängigkeit wenigstens einer Abweichung zwischen Ist- und Sollage der Mantelfläche im Bereich des Flüssigkeitsauftrags.

11. Vorrichtung nach Anspruch 10, **dadurch gekennzeichnet,** daß wenigstens ein Abstandssensor (20, 20a, 20b, 20') zur Messung der radialen Istlage der Mantelfläche des Schablonenzylinders (1) vorhanden ist, und daß die Adressen-Umschalteinrichtung (31b) in Abhängigkeit des Ausgangssignals des Abstandssensors (20, 20a, 20b) ein Adressenumschaltsignal zur Ansteuerung des Adressenzählers (31a) generiert.

12. Vorrichtung nach Anspruch 11, **dadurch gekennzeichnet,** daß der wenigstens eine Abstandssensor (20a, 20b, 20c, 20') außerhalb des Bereichs des Flüssigkeitsauftrags liegt.

13. Vorrichtung nach Anspruch 11, **dadurch gekennzeichnet,** daß die Düse (2) als Abstandssensor ausgebildet ist oder einen solchen trägt.

14. Vorrichtung nach einem der Ansprüche 10 bis 13, **gekennzeichnet durch** einen Druckerzeuger (22, 23) zur Erzeugung eines Innendrucks innerhalb eines hohlen Schablonenzylinders.

reale Schablone

ideale Schablone

$R_0$

$\Gamma$

DA

Tropfen

Düse

w

$\Delta s_{Grav}$

$L_T$

A

Umlaufgeschwindigkeit

$\omega = \dfrac{d\varphi}{dt}$

NM

$\chi$

$s_{Sens}$

$\Delta s_{Sens}$

$s_0$

$\varphi$

Sensor

| DA | = | Dre hachse |
|---|---|---|
| NM | = | Nullmarke |
| $s_0$ | = | Abstand des Sensors zur idealen Schablone |
| $s_{Sens}$ | = | Abstand des Sensors zur realen Schablone |
| w | = | Fluggeschwindigkeit des Tropfens |

Fig. 1

reale Schablone

ideale Schablone

Tropfen

Düse

$R_0$

$\Gamma$

e

DA

MP

$R_0$

$\Delta s_{Grav}$

$L_T$

Umlaufgeschwindigkeit

$\omega = \dfrac{d\varphi}{dt}$

NM

$(=\varepsilon_1)$ $\varphi_0$

$\Delta t_{sens}$

$\chi$

w

$\Delta s_{Sens}$

$s_0$

$s_{Sens}$

$\varphi$

Sensor

DA = Dre hachse
NM = Nullmarke
MP = Mittelpunkt der wirklichen Schablone
$s_0$ = Abstand des Sensors zur idealen Schablone
$s_{Sens}$ = Abstand des Sensors zur realen Schablone

Fig. 2

28

Düse

Tropfen

$w$

$\varepsilon_1$

$L_T$

$v$

Adresse, die wirklichen
Treffpunkt Schablone-
Tropfen entspricht

ideale Schablone

reale Schablone

$u = \omega R o$

$\Delta s_{Sens}$

$\Delta t_{Düs,2,1}$

$$k - \frac{L_T . \omega . N_{um}}{w . 2 . \pi}$$

niedrigere
Adressen

1.Korrektur =
=$k + \Delta z_{2,1}$

2.Korrektur

$k$

höhere
Adressen

Fig. 3

reale Schablone

$\varepsilon_1$

$\varepsilon_2$

$\Delta s_{Sens}(k)$

$\Delta s_{Sens}(k - \Delta z_{2,1})$

ideale Schablone

$\Delta t_{Düs,2,2} = \,\, \widehat{=} \Delta z_{2,2}$

$$\Delta t_{Düs,2,1} = \,\, \widehat{=} \Delta z_{2,1} = - \frac{N_{um}}{2.\pi.R_0} \cdot \Delta s_{Sens}(k) \cdot \frac{\omega.R_0}{w}$$

1.Korrektur = $= k + \Delta z_{2,1}$

2.Korrektur = $= k + \Delta z_{2,1} + \Delta z_{2,2}$

Fig.4

$a_k =$ Amplitude des 'Schwingungs= knotens' in der Umfangsrich= tung der Schablone

$a_k = a/2$

$B_1 + a$

$a$

$B_1$

$B_2$

$B_2 - a$

$a$

Schwingungsknoten
nur für Bewegungskomponente der Schwingung welche normal zur Oberfläche der Schablone steht =
= Schwingungsbauch für die Bewegungskomponente der Schwingung die in die Umfangs— richtung der Schablone fällt.

Schwingungsbauch
nur für Bewegungskomponente der Schwingung welche normal zur Oberfläche der Schablone steht =
= Schwingungsknoten für die Bewegungskomponente der Schwingung die in die Umfangs— richtung der Schablone fällt.

Fig. 5

Fig. 6

Fig. 7

Fig. 8

Fig. 9

| | Europäisches Patentamt | **EUROPÄISCHER RECHERCHENBERICHT** | Nummer der Anmeldung<br>EP 96 10 2598 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP-A-0 679 510 (SCHABLONENTECHNIK KUFSTEIN AKT) 2.November 1995<br>* das ganze Dokument * | 1,2,<br>4-12,14 | H04N1/053<br>B41C1/14<br>G01B11/24 |
| Y | WO-A-92 12592 (PRESSTEK INC) 23.Juli 1992<br><br>* das ganze Dokument * | 1,2,<br>4-12,14 | |
| A | EP-A-0 590 164 (KUFSTEIN SCHABLONENTECH GMBH) 6.April 1994<br>* Spalte 6, Zeile 19 - Zeile 31 * | 1,3,10,<br>13 | |
| A | DE-A-25 08 985 (CROSFIELD ELECTRONICS LTD.)<br>* Seite 8, Zeile 19 - Zeile 23; Abbildung 2 * | 3,13 | |

| | RECHERCHIERTE SACHGEBIETE (Int.Cl.6) |
|---|---|
| | H04N<br>B41C<br>G01B |

Der vorliegende Recherchenbericht wurde für alle Patentansprüche erstellt

| Recherchenort | Abschlußdatum der Recherche | Prüfer |
|---|---|---|
| DEN HAAG | 24.Juli 1996 | Hazel, J |

EPO FORM 1503 03.82 (P04C03)